Europäisches Patentamt

European Patent Office

Office européen des brevets

(19)

(11) **EP 1 194 843 B1**

(12) **FASCICULE DE BREVET EUROPEEN**

(45) Date de publication et mention
de la délivrance du brevet:
**12.02.2003 Bulletin 2003/07**

(21) Numéro de dépôt: **00949658.9**

(22) Date de dépôt: **06.07.2000**

(51) Int Cl.⁷: **G06F 9/44**, H04N 5/00

(86) Numéro de dépôt international:
**PCT/FR00/01950**

(87) Numéro de publication internationale:
**WO 01/004747 (18.01.2001 Gazette 2001/03)**

(54) **SYSTEME DE DEVELOPPEMENT RAPIDE D'APPLICATIONS INTERACTIVES**

SYSTEM ZUR SCHNELLEN ENTWICKLUNG INTERAKTIVER ANWENDUNGEN

SYSTEM FOR FAST DEVELOPMENT OF INTERACTIVE APPLICATIONS

(84) Etats contractants désignés:
**DE ES GB IT NL SE**

(30) Priorité: **09.07.1999 FR 9908945**

(43) Date de publication de la demande:
**10.04.2002 Bulletin 2002/15**

(73) Titulaires:
• **FRANCE TELECOM**
**75015 Paris (FR)**
• **TELEDIFFUSION DE FRANCE**
**75015 Paris (FR)**

(72) Inventeurs:
• **HERVET, Yves**
**F-35235 Thorigne Fouillard (FR)**
• **CARADO, Jean-Antoine**
**F-35520 Melesse (FR)**

(74) Mandataire: **Loisel, Bertrand**
**Cabinet Plasseraud,**
**84, rue d'Amsterdam**
**75440 Paris Cédex 09 (FR)**

(56) Documents cités:
**WO-A-96/31829          WO-A-99/04349**

• **"OpenAuthor Overview Technical White Paper"
[ONLINE], juillet 1998 (1998-07), pages 1-11,
XP002126675 Extrait de l'Internet:
<URL:http://www.opentv.com/docs/openauth
or _whitepaper.pdf> [extrait le 2000-03-14]**
• **M VAZIRGIANNIS ET AL: "i-Mu.S.E - Interactive
Multimedia Scenario Editor" PROCEEDINGS OF
1998 INTERNATIONAL WORKSHOP ON
MULTIMEDIA DATABASE MANAGEMENT, 5 - 7
août 1998, pages 145-152, XP002133064 Dayton,
OH, USA**
• **AGNEW J N ET AL: "THE RIGHT TOOL FOR THE
JOB: A QUEST FOR THE PERFECT AUTHORING
PACKAGE" PROCEEDINGS OF ANNUAL
CONFERENCE ON SYSTEMS
DOCUMENTATION, 13 octobre 1992
(1992-10-13), pages 253-258, XP000579018**

## Description

La présente invention est relative à un système de développement rapide d'applications interactives.

Le développement très important des systèmes de télécommunication numérique, par câble, satellite ou réseau hertzien, provoque un accroissement constant et soutenu de la demande d'applications interactives diffusées par ces systèmes de télécommunication numérique, applications interactives associées ou non à des programmes de télévision.

Ces applications peuvent concerner des services aussi divers que prévisions météorologiques, gestion de portefeuilles boursiers, applications de type magazine TV, radio ou analogue.

D'une manière générale, et afin de permettre l'essor et la pérennité du développement de ces applications, en raison de la complexité croissante de ces applications et des services fournis par ces dernières, les terminaux d'accès à ces applications, initialement constitués avant tout par des récepteurs TV munis d'un module de télécommande, ont évolué vers des terminaux d'ordinateurs munis de capacités de traitement d'images vidéo et de restitution sonore, appareils plus prosaïquement désignés par *"ordinateurs de salon"* dans le domaine grand public.

En raison de cette évolution, les terminaux d'accès à ces applications étant ainsi dotés de systèmes d'exploitation de plus en plus puissants, il existe une forte demande pour l'accès à des applications de plus en plus sophistiquées.

En raison du caractère très divers, voire disparate, des terminaux d'accès à ces applications interactives, ce type d'applications pouvant être accessible par l'intermédiaire de systèmes très différents tel que *OPEN TV* commercialisé par la société OPEN TV Incorporated aux Etats-Unis, Media Highway, distribué en France par la société CANAL +,Mheg système ouvert répondant au système de normalisation ISO, et système *JAVA* dédié à la télévision, en cours d'établissement, le développement d'applications interactives est très complexe, dans la mesure où un tel développement ne peut être envisagé qu'en fonction du système d'accès mis en oeuvre.

En d'autres termes, dans l'optique d'un tel développement, ce dernier ne peut être réalisé que pour un système d'exploitation donné correspondant à celui du système d'accès final utilisé.

Dans de telles conditions, les applications interactives précitées sont confrontées, pour chaque système d'exploitation considéré, aux contraintes ci-après :

- définition de la structure de l'application interactive considérée et de son modèle logique, une application interactive étant composée de scènes, chaque scène étant elle-même composée d'objets virtuels formés par des objets ou composants divers en permettant la représentation ;
- définition des caractéristiques du terminal d'accès, ou plate-forme cible permettant l'accès à ou l'exécution de cette application interactive, ces caractéristiques pouvant comporter, notamment, la taille mémoire vive RAM disponible, les fontes accessibles et les palettes de couleurs disponibles ;
- discrimination entre éléments ou objets permanents, téléchargés avec l'application, et nécessaires au fonctionnement minimal de l'application, des éléments temporels, nécessaires à un instant donné, diffusés cycliquement ;
- mise à jour d'une application interactive ou d'une ou plusieurs scènes à partir de données internes ou externes au système d'accès ;
- réutilisation des objets, objets virtuels d'une scène ou d'une ou plusieurs scènes elles-mêmes ;
- association aux événements externes au système d'accès, introduits par un clavier, un pavé numérique ou un boîtier de télécommande de téléviseur, un modem ou une carte à microprocesseur, et aux événements internes au système d'accès tels que des temporisations, un langage de commande suffisant pour conférer à l'application son caractère interactif ;
- contrôle de la construction d'une scène, de sa représentation et des enchaînements entre scènes successives.

Alors que les applications interactives précitées sont actuellement construites pour le et dédiées au système d'exploitation de la plate-forme ou du système d'accès, ces applications doivent, à l'heure actuelle, être construites dans le cadre strict correspondant.

La présente invention a pour but de remédier aux inconvénients précités par la mise en oeuvre d'un système de développement d'applications interactives non dédiées au système d'accès à ces applications.

En particulier, dans ce but, un objet de la présente invention est la mise en oeuvre d'un système de développement d'applications interactives permettant d'ouvrir le média TV, c'est-à-dire le système de télécommunication par la télévision, à tout type d'application interactive liée ou non aux programmes TV télédiffusés.

En particulier, et en raison de l'absence de lien entre les applications interactives, développées grâce au système de développement objet de la présente invention, et le ou les systèmes d'accès à ces applications, un autre objet de cette dernière est la mise en oeuvre d'un système de développement d'applications interactives permettant le développement d'applications interactives natives et la traduction de ces applications interactives natives en applications interactives dédiées à l'un ou l'autre des systèmes d'exploitation utilisé par le système ou plate-forme d'accès à ces applications interactives dédiées.

En référence à l'objet précédemment cité, un autre objet de la présente invention est enfin, grâce au processus de traduction d'applications interactives natives développées grâce au système de développement objet de la présente invention, la mise en oeuvre d'un processus de traduction de ces applications interactives natives en des applications interactives dédiées à des médias autres que les médias TV, en particulier les médias de transmission de messages ou documents en réseau tels que documents HTML.

Le système de développement d'applications interactives distribuées sur un canal de transmission numérique, objet de la présente invention, ces applications interactives étant installées en un point du réseau de transmission et consistant en une succession de scènes thématiques incorporant des images en mode point, des images vidéo, des séquences sonores et des informations sous forme de fichiers texte représentés au niveau d'au moins un moniteur d'affichage, le caractère interactif de ces applications étant produit par l'intermédiaire d'une fonctionnalisation spécifique de l'interface de commande d'un module de commande du moniteur d'affichage muni d'un système d'exploitation, l'ensemble moniteur d'affichage, module de commande et système d'exploitation constituant une plate-forme d'exécution, est remarquable en ce qu'il comporte au moins un éditeur électronique permettant la simulation, d'une part, de l'écran d'affichage de ce moniteur d'affichage, et, d'autre part, de l'interface de commande d'un module de commande associé à ce moniteur d'affichage. Il comporte en outre un module générateur d'objets virtuels, spécifiques à l'application considérée, chaque objet virtuel étant constitué par des objets ou composants choisis parmi au moins des images en mode point, des images vidéo, des séquences sonores et des informations sous forme de fichiers textes et susceptible d'être édité, affiché et représenté par l'éditeur électronique pour former au moins une scène constitutive d'une application interactive considérée.

Un module de commande de mise en corrélation d'une pluralité de couples événement/action est prévu, un événement étant défini comme la rupture d'un équilibre d'état du système d'exploitation et une action étant définie comme une initialisation respectivement une modification d'au moins un des paramètres d'affichage et de représentation d'une ou plusieurs scènes constitutives de cette application. Un module de mémorisation de l'ensemble de ces couples événement/action mis en corrélation et constituant l'application interactive, au moins sous forme native, est prévu.

Le système de développement d'applications interactives, objet de la présente invention, trouve application à la production d'applications interactives distribuées sur des canaux de transmission tels que les canaux de télévision et les systèmes multimédia tels que le W.W.W., les applications interactives étant, dans ce cas, produites sous forme de documents HTML, de langage interprété JAVA connues sous le nom de *"JAVA script"* d'applications JAVA ou "*Applet JAVA"* ou d'un document au format exécutable par un logiciel de représentation audio ou vidéo, désigné par "*pluggin*" spécifique.

Il sera mieux compris à la lecture de la description et à l'observation des dessins dans lesquels :

- la figure 1a représente aux points 1) à 5) un schéma synoptique illustrant la gestion des documents dans le cas des plates-formes d'accès de type OpenTV, Mheg, JavaTV, applications HTML, application spécifique pour W.W. W par l'intermédiaire d'un logiciel de représentation audio ou vidéo désigné par *"pluggin"* respectivement ;
- la figure 1b représente, à titre illustratif, un schéma synoptique du système de développement d'applications interactives, objet de la présente invention ;
- la figure 1c représente, sous forme d'une structure arborescente, les éléments constitutifs d'une application interactive permettant la construction de tout type d'application interactive grâce au système de développement objet de la présente invention tel que représenté en figure 1b ;
- la figure 1d représente, sous forme d'un organigramme, le format logique d'une application interactive développée grâce au système de développement objet de la présente invention, ce format logique introduisant les relations fonctionnelles entre les différentes structures de données permettant le développement de cette application interactive ;
- la figure 2 représente, à titre d'exemple non limitatif, l'édition d'une interface de commande d'un module de commande de type boîtier de télécommande de téléviseur ;
- les figures $3a_1$ à $3a_3$ représentent, à titre d'exemple non limitatif, un outil logiciel de création de macro-commandes d'instructions ;
- les figures $3b_1$ et $3b_2$ représentent, à titre d'exemple non limitatif, un outil logiciel de création d'objets virtuels ;
- la figure 3c représente, à titre d'exemple non limitatif, un outil logiciel d'édition des médias, un média étant défini dans le contexte de développement d'une application interactive grâce au système de développement objet de la présente invention, par un moyen déterminé de représentation d'un objet ou composant constitutif d'au moins une scène de cette application interactive ;
- la figure 3d représente, à titre d'exemple non limitatif, un outil logiciel d'édition des fonds de scène ;
- la figure 3e représente, à titre d'exemple non limitatif, un outil logiciel d'édition de phrases, sous forme de fichiers texte affectés soit à une scène, soit à l'application interactive contenant cette scène ;
- la figure 3f représente, à titre d'exemple illustratif, un outil logiciel d'édition de variables, ces variables correspondant à un contenu texte ou numérique ;

- la figure 3g représente, à titre d'exemple illustratif, un outil logiciel de création de scènes ;
- les figures $3h_1$ et $3h_2$ représentent, à titre d'exemple non limitatif, un outil logiciel de création d'options ;
- la figure 3i représente, à titre d'exemple illustratif, un outil logiciel d'édition des attributs d'une application ;
- les figures $3j_1$ et $3j_2$ représentent, à titre d'exemple non limitatif, un outil logiciel de consultation de tables communes de données spécifiques au système de plate-forme cible d'accès à l'application interactive développée ;

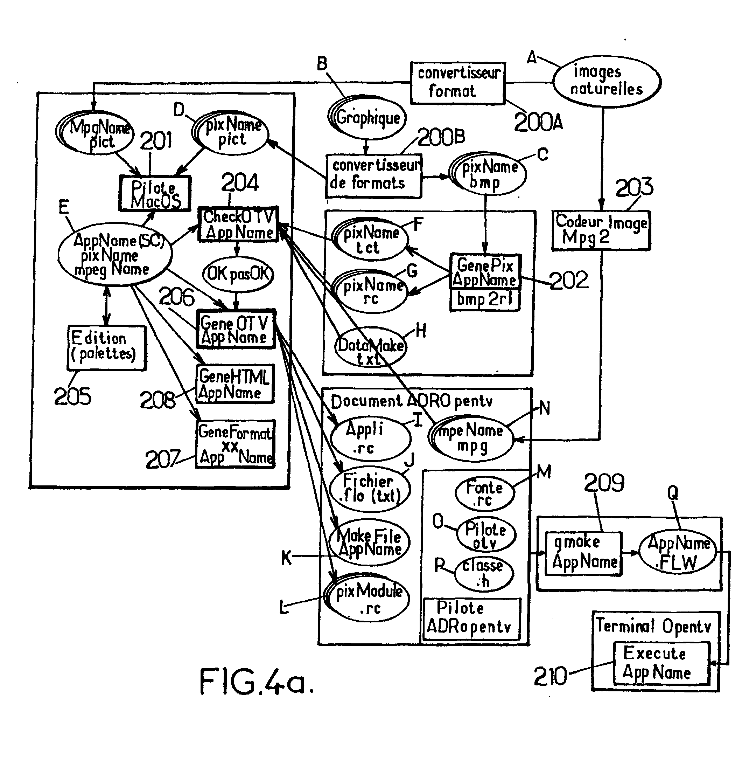

- la figure 4a représente, à titre d'exemple purement illustratif, un organigramme fonctionnel de création d'une application interactive pour un système d'exploitation du type *OPEN TV* à partir des structures de données obtenues grâce à la mise en oeuvre du système de développement objet de la présente invention tel que décrit en liaison avec les figures précédentes, ces structures de données constituant une application interactive native, susceptible d'être traduite en l'un ou l'autre des formats du système d'exploitation du système ou plate-forme cible d'accès à cette application interactive ;
- la figure 4b représente, à titre purement illustratif, une page écran de gestion du processus de création représenté en figure 4a ;
- la figure 5a représente, à titre d'exemple purement illustratif, un module d'exploitation et d'acquisition des objets ou composants constitutifs de chaque scène d'une application interactive plus particulièrement adapté à la diffusion cyclique de cette application interactive sur un canal de télévision, ce module d'exploitation et d'acquisition permettant d'optimiser à la fois la quantité d'espace mémoire nécessaire et le temps d'accès à cette application interactive au niveau d'une plate-forme ou d'un système cible d'accès de type déterminé.
- la figure 5b représente, à titre illustratif, un organigramme fonctionnel représentatif de l'ensemble des séquences constitutives d'une application interactive arbitraire ;

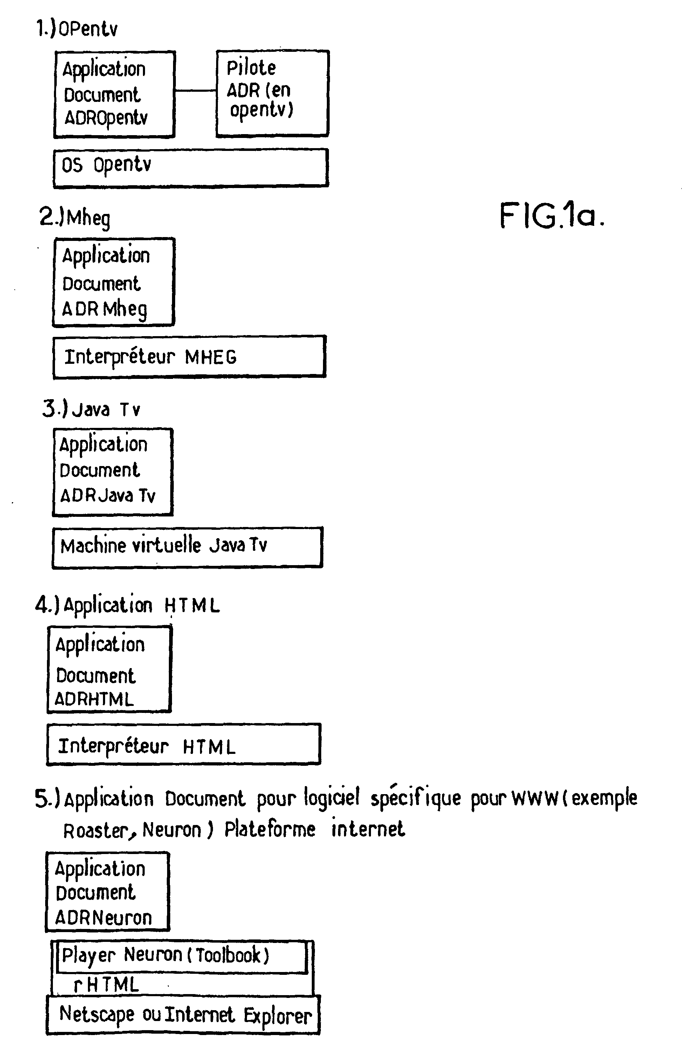

Une description plus détaillée du système de développement d'applications interactives, objet de la présente invention, sera maintenant donnée en liaison avec les figures 1a à 1c et les figures suivantes.

D'une manière générale, on rappelle, d'une part, que les applications interactives sont installées en un point du réseau de transmission numérique afin de permettre une transmission de ces applications interactives, soit sur appel de l'utilisateur dans le cas où ces applications interactives sont transmises par l'intermédiaire du W.W.W., pour *World Wide Web*, sous forme de documents HTML, soit télédiffusées de manière cyclique lorsque le canal de transmission numérique est un canal de télévision par exemple. On indique, de manière plus spécifique, que ces données cycliques peuvent également contenir des documents HTML et des applications ou langages interprétés JAVA, telles que définies précédemment. Dans ce cas, les applications interactives précitées sont installées en tête du réseau de télédiffusion, alors que dans le cas de la transmission de documents HTML, ces applications sont par exemple implantées au niveau d'un site W.W.W et d'un serveur par exemple.

La notion de document est, de manière générale, explicitée en fonction des différentes plates-formes d'accès susceptibles d'être utilisées en référence à la figure 1a, aux points 1) à 5), pour les plates-formes de type OpenTV, Mheg, et JavaTV, applications HTML proprement dites et applications pour logiciel de représentation audio ou vidéo désigné par *"pluggin"* spécifique pour le W.W.W. tel que *"Roadster", "Neuron"* pour plate-forme d'accès INTERNET. Le document est géré par le système d'exploitation OS OpenTV par l'intermédiaire d'un pilote ADR, par un interpréteur Mheg, par une machine virtuelle JavaTV, par un interpréteur HTML et par un logiciel de type client/serveur, encore désigné par *"player"*, et un navigateur NETSCAPE ou INTERNET EXPLORER respectivement.

D'autre part, on rappelle également que chaque application interactive consiste en une succession de scènes thématiques pouvant incorporer des images en mode point, des images vidéo, des séquences sonores et des informations sous forme de fichiers texte par exemple. Lors de l'accès à partir d'un système ou d'une plate-formé d'accès à ces applications interactives, ces scènes sont représentées au niveau d'au moins un moniteur d'affichage incorporé dans le système ou la plate-forme d'accès précité. Par représentation d'une ou plusieurs scènes et, en définitive, de l'application interactive considérée, on entend la restitution à l'utilisateur, non seulement de l'ensemble des informations vidéo ou images par affichage au niveau de ce moniteur, mais également la restitution sonore de tout fichier correspondant par l'intermédiaire de circuits audio équipant le système ou la plate-forme d'accès.

Le caractère interactif des applications précitées est produit par l'intermédiaire d'une fonctionnalisation spécifique de l'interface de commande d'un module de commande du moniteur d'affichage muni, bien entendu, d'un système d'exploitation.

Ainsi, l'ensemble moniteur d'affichage, module de commande et système d'exploitation constitue un système ou plate-forme d'exécution ou d'accès à l'application interactive considérée.

On rappelle en particulier que le système d'exploitation considéré peut être très divers selon la plate-forme d'accès utilisée. Ces systèmes d'exploitation peuvent notamment être constitués par les systèmes MacOS,PC pour *Personal Computer,* UNIX, LINUX ou autres. En particulier, lorsque la plate-forme d'accès utilisée correspond au système *OPEN TV* précédemment mentionné dans la description, on indique que le système d'exploitation considéré est un système d'exploitation réduit ou dédié à l'application interactive considérée. Dans un tel cas, le module de commande est le plus souvent constitué par un module de commande ou de télécommande universelle à boutons, permettant de commander le téléviseur muni du moniteur d'affichage de type télévision. On comprend en particulier que le système d'exploitation dédié, dans ce cas, peut correspondre à l'affectation de certaines fonctions aux boutons du boîtier de télécommande en fonction des nécessités de l'application.

Dans le cas où l'application interactive concerne les documents HTML transmis sur le W.W.W. et lorsque la plate-forme d'accès est constituée par un micro-ordinateur, le système d'exploitation considéré n'est autre que le système d'exploitation de ce micro-ordinateur, bien entendu adapté à la gestion des documents HTML. Dans ce dernier cas, le système d'exploitation global est beaucoup plus puissant que dans le cas précédent.

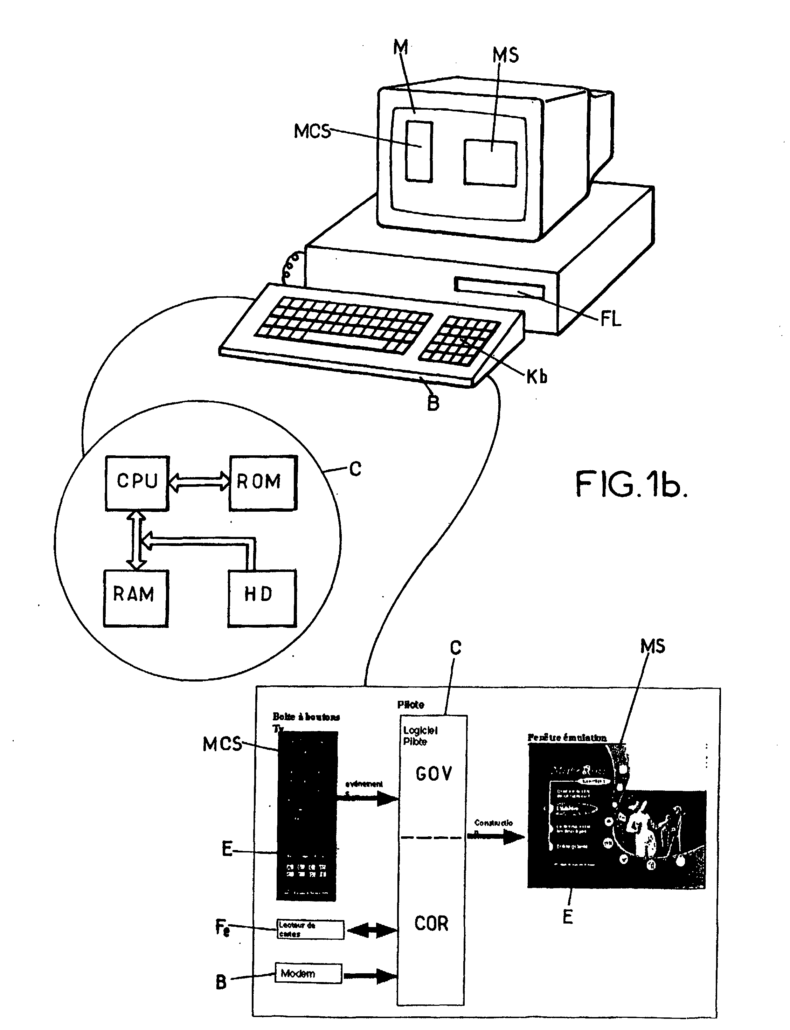

Ainsi que représenté en figure 1b, le système de développement d'applications interactives, objet de la présente invention, est construit sur la base d'un micro-ordinateur ou d'une station de travail comportant tous les éléments essentiels de ces derniers, à savoir une unité centrale de calcul CPU, un moniteur d'affichage M, une mémoire de travail RAM et une mémoire morte ROM ainsi que des organes d'entrée/sortie périphériques tels que par exemple un clavier Kb, un lecteur de disque souple F1, une mémoire de masse de type disque dur HD et tout moyen d'intercommunication lorsque ce micro-ordinateur est connecté en réseau. Ces éléments ne seront pas décrits en détail car ils correspondent à des éléments classiques équipant tout système de micro-ordinateurs ou de station de travail.

En référence à la figure 1b, on indique que le système de développement d'applications interactives, objet de la présente invention, est remarquable en ce qu'il comprend un éditeur électronique, noté E, permettant la simulation de l'écran d'affichage du moniteur d'affichage, ainsi que de l'interface de commande d'un module de commande associé à ce moniteur d'affichage. Sur la figure 1b on a représenté, à titre d'exemple non limitatif, la simulation d'un boîtier de commande de télévision par l'intermédiaire du moniteur M et bien entendu de l'éditeur E. De même, sur la figure 1b, on a représenté la simulation de l'écran d'affichage du moniteur d'affichage en un moniteur d'affichage simulé MS par l'intermédiaire de l'éditeur E, ce moniteur d'affichage simulé MS étant réputé représenter une scène d'une application interactive donnée. Ainsi, le module de commande simulée, noté MCS, et l'écran d'affichage simulé du moniteur d'affichage simulé MS sont représentés sur le moniteur M du micro-ordinateur abritant le système de développement d'applications interactives, objet de l'invention.

En outre, ainsi que représenté sur la même figure 1b, le système précité comporte un module générateur d'objets virtuels, noté GOV, spécifique à l'application considérée. Chaque objet virtuel est constitué par des composants choisis parmi au moins des images en mode point, des images vidéo, des images 3D, des séquences sonores et des informations sous forme de fichiers texte qui sont susceptibles d'être édités, affichés et représentés par l'éditeur électronique E pour former au moins une scène constitutive de l'application.

Par objet virtuel, on entend des collections d'objets ou composants constituées par des médias selon la définition précédemment donnée dans la description. Ainsi, lorsque l'objet ou composant est constitué par une séquence sonore, c'est-à-dire par un fichier numérique permettant la reproduction d'une séquence sonore, ce dernier peut être représenté par les circuits audio de la plate-forme ou système d'accès à l'application interactive considérée. Lorsque l'objet ou le composant est constitué par une image en mode point ou une image vidéo, cet objet peut être également représenté par affichage, par une image en mode point ou une image vidéo, c'est-à-dire une image munie de ses caractéristiques de balayage spécifique, au niveau du moniteur et du moniteur simulé MS, alors que lorsque l'objet ou composant est constitué par un fichier texte, celui-ci peut être affiché en mode texte par exemple sur le moniteur M et bien entendu sur le moniteur d'affichage simulé MS.

En outre, ainsi que représenté sur la figure 1b, le système de développement, objet de l'invention, comprend un module de commande, noté COR, de mise en corrélation d'une pluralité de couples événement/action relatifs aux scènes constitutives de l'application interactive précitée.

De manière plus spécifique, on indique qu'un événement est défini comme la rupture d'un équilibre d'état du système d'exploitation par une entrée externe dans le cadre de l'exécution de l'application interactive, alors qu'une action est définie comme une initialisation ou, le cas échéant, une modification d'au moins l'un des paramètres d'affichage et de représentation d'une ou plusieurs scènes constitutives de l'application interactive considérée. Bien entendu, une action est réputée être consécutive à un événement ou réciproquement en raison du caractère interactif de l'application considérée.

Enfin, un module de mémorisation, tel qu'un disque dur HD, de l'ensemble des couples événement/action mis en corrélation est prévu, cet ensemble constituant en fait l'application interactive, au moins sous forme native, ainsi qu'il a été mentionné précédemment dans la description. Par application interactive native, on désigne l'ensemble des couples événement/action mis en corrélation grâce au système de développement, objet de la présente invention, cet ensemble des couples événement/action étant ainsi réalisé par mise en correspondance bi-univoque logique entre événement et action indépendamment du format d'accès imposé par le système ou plate-forme d'accès à l'application interactive considérée du fait des caractéristiques physiques et formelles de ce système ou de cette plate-forme d'accès.

Ainsi, sur la figure 1b, on a représenté, d'une part, les composants physiques de calcul et de mémorisation du micro-ordinateur tels que unité de calcul CPU, mémoire morte ROM, mémoire vive de travail RAM et une mémoire de masse HD, l'ensemble étant désigné par la référence C et intégré au micro-ordinateur abritant le système de développement, objet de la présente invention, ainsi que les éléments actifs de ce dernier, c'est-à-dire éditeur électronique E permettant la simulation de l'écran d'affichage du moniteur d'affichage simulé MS et de l'interface de commande, ou module de commande, MCS, associée à ce moniteur d'affichage accompagnés du module générateur d'objets virtuels GOV et du module de commande de mise en corrélation COR. Sur la figure 1b, le module générateur d'objets virtuels GOV et le module de commande de mise en corrélation des couples événement/action COR sont réputés réalisés sous forme d'un logiciel pilote chargé en mémoire de travail RAM, soit à partir du disque dur HD, soit le cas échéant à partir de la mémoire morte ROM. L'ensemble est contenu dans le boîtier B.

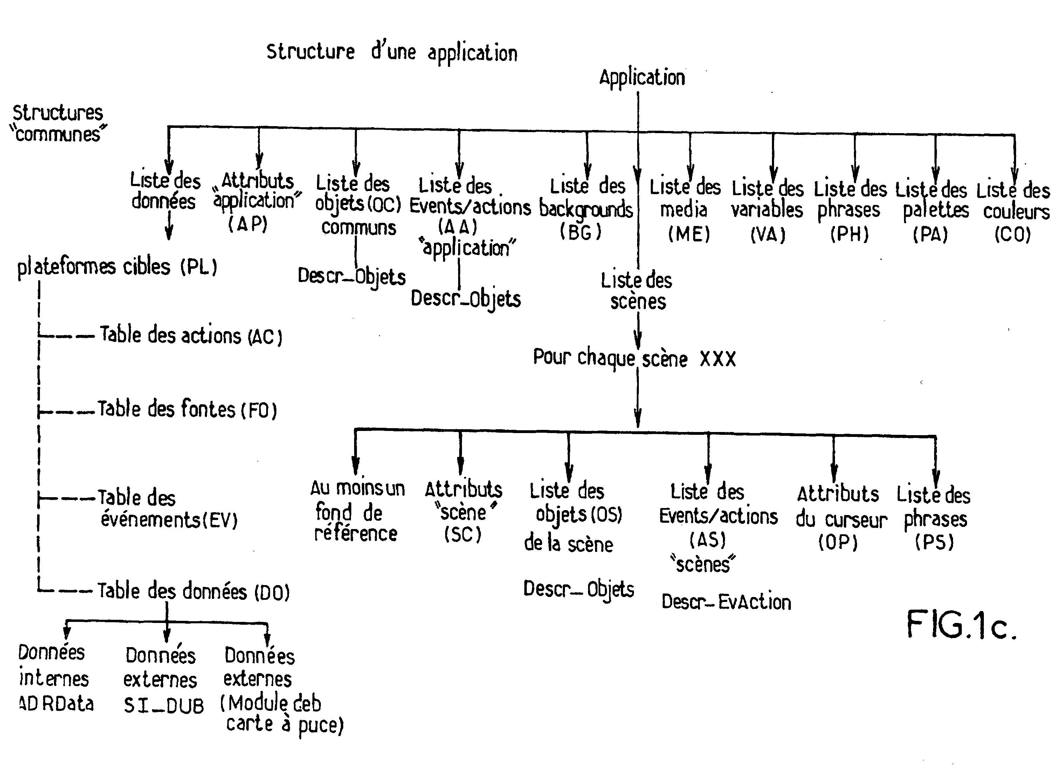

Préalablement à la description du module générateur d'objets virtuels et du module de commande de mise en corrélation de couples événement/action, une description de la structure de données permettant la définition d'une application interactive grâce au système de développement, objet de la présente invention, sera donnée en liaison avec la figure 1c.

En référence à la figure précitée, on indique qu'une application interactive est définie par un ensemble de listes informatiques définissant, pour cette application interactive, les éléments structurels communs.

Ainsi que représenté sur la figure 1c, cet ensemble de listes peut comporter :

-    une liste des données, cette liste des données pouvant consister en des fichiers externes numériques ou des fichiers texte relatifs à l'application interactive considérée. La liste des données permet de définir le contexte de l'application ou d'un groupe d'applications données telles que par exemple une application interactive de service météo, de service de résultats de jeu tel que le loto, ou d'un horoscope ou de consultation d'un thème astral. Les données sont alors des données physiques, telles que par exemple celles relatives à une région pour un service météo ou analogue ;
-    une liste d'attributs de l'application, notée AP ;
-    une liste des objets communs OC pouvant comporter une description de ces objets ;
-    une liste des événements/actions relative à l'application, c'est-à-dire des événements/actions mis en corrélation, liste notée AA, pouvant comporter une liste descriptive de ces événements/actions ;
-    une liste des fonds de scène ou liste des *backgrounds,* notée BG ;
-    une liste des scènes, la liste des scènes comportant des références de scènes ordonnées permettant de représenter la séquence des scènes pour constituer une application interactive considérée ;
-    une liste des médias ME utilisés, la notion de médias correspondant à celle précédemment donnée dans la description ;
-    une liste des variables VA ;
-    une liste des phrases PH, les phrases étant considérées comme des fichiers texte ;
-    une liste des palettes PA de couleurs pour l'application considérée, et, enfin,
-    une liste des couleurs CO effectivement utilisées.

En ce qui concerne la liste des scènes, et selon un mode de réalisation particulièrement avantageux, non limitatif, du système de développement, objet de la présente invention, on indique que chaque scène peut être définie par une liste de scènes comportant par exemple :

-    au moins un élément relatif à un fond de référence ;
-    un élément relatif à un attribut de scène SC ;
-    une liste des objets ou composants constitutifs de la scène ;
-    une liste des événements/actions de la scène, notée AS ;
-    un attribut de curseur, noté OP, cet attribut de curseur définissant notamment la position d'origine du curseur dans la scène afin de permettre l'utilisation interactive de la scène par l'utilisateur ;
-    une liste des phrases PS.

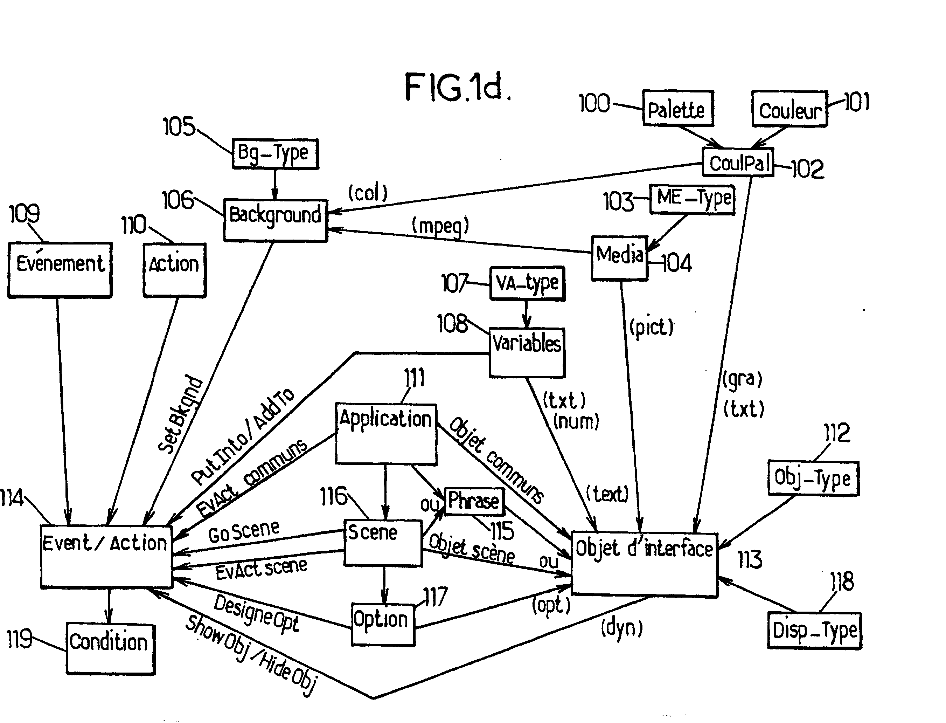

Une description plus détaillée du format logique d'une application interactive native développée grâce au système de développement objet de la présente invention, sera maintenant donnée en liaison avec la figure 1d.

D'une manière générale, on indique que ce format logique introduit les relations fonctionnelles entre les différentes structures de données permettant le développement d'une application interactive considérée, au moins sous forme native.

Sur la figure 1d précitée, on indique que tous les blocs rectangulaires représentent de manière non limitative des structures de données remarquables mises en oeuvre par chaque application numérique développée conformément au système de développement rapide d'applications interactives, objet de la présente invention, l'ensemble de ces structures de données et les relations fonctionnelles précitées, et en particulier les couples *"EVENEMENT"* / *"ACTION"* précédemment mentionnés dans la description permettant la définition de l'application interactive native considérée.

Ainsi, sur la figure 1d, on a représenté les différentes structures de données représentées par des rectangles, ces rectangles étant reliés par des flèches indiquant la relation logique entre les structures de données correspondantes. Les structures de données peuvent être représentées sous toute forme de langage, notamment les langages objets C++ et JAVA.

Les différents rectangles portant les références 100 à 119 désignent les structures de données ci-après :

- 100 : palette de couleurs
- 101 : couleur choisie
- 102 : couleur choisie dans la palette considérée
- 103 : type de média utilisé
- 104 : forme du média
- 105 : type de fond ou *background*
- 106 : fond ou *background*
- 107 : type de variable VA-type
- 108 : variables, les variables étant soit de type texte, soit de type numérique
- 109 : *"EVENEMENT"*
- 110 : *"ACTION"*
- 111 : application
- 112 : type d'objet, désigné par OBJ_TYPE,
- 113 : objet d'interface
- 114 : couple *"EVENEMENT/ACTION"* mis en corrélation
- 115 : phrases
- 116 : scène
- 117 : options
- 118 : type d'affichage, désigné par Disp_Type
- 119 : condition.

Les relations logiques entre structures de données précitées telles que représentées sur la figure 1d sont données au tableau 1 introduit en annexes.

Dans la présente description, les tableaux 1 à 28 relatifs à des structures de données sont introduits en annexes.

Dans le tableau 1, les flèches représentent le sens des flux de données entre structures de données.

Des indications plus générales, relatives à l'organisation de la structure des données précitée, seront maintenant introduites ci-après dans la description.

D'une manière générale, pour chaque plate-forme d'accès, un pilote interpréteur des données de l'application dans le langage du moteur interactif est prévu. Les données logiques et les données dépendant de chaque plate-forme sont structurées de manière distincte.

Les données sont agencées sous forme de structures de tables communes relativement aux plates-formes PL, aux fontes FO, aux actions AC, aux événements EV, et aux données DO décrivant et caractérisant d'une façon originale l'environnement de la plate-forme ou du terminal d'accès à l'application interactive considérée.

Ainsi, c'est dans le cadre des structures de données précitées et de leur relation logique, telle que représentée en figure 1d, que l'ensemble des éléments du système de développement d'applications interactives, objet de la présente invention, permet d'effectuer un tel développement.

A titre d'exemple non limitatif, les tables de données relatives aux plates-formes PL peuvent présenter la structure ci-après telle que représentée au tableau 2.

Dans le tableau précité, on indique que les données relatives aux tables plates-formes PL peuvent comprendre avantageusement les variables ci-après : nombre maximum de caractères pour les textes, fixé par exemple à 255, à titre d'exemple non limitatif, et pour chaque plate-forme PL : identifiant de la plate-forme, nom de la plate-forme, nombre de couleurs maximum de la palette, ce nombre maximum, dans le cadre du système *OPEN TV* étant limité à 15, mémoire maximale en kilo-octets pour le chargement des médias, espace disponible pour le média sur le disque dur HD par exemple, nombre maximum de médias par disque ou par module de mémorisation, caractère de fin de ligne pour les textes, mode de sécurité de la plate-forme et, le cas échéant, un paramètre de 0 à 255 indiquant l'efficacité de la transparence, c'est-à-dire l'opacité de la couleur de transparence.

En ce qui concerne la structure de données relative aux actions et aux tables d'actions AC, une action se caractérisant par plusieurs paramètres et ne pouvant être déclenchée que par un événement, la structure de données correspondante est donnée dans le tableau 3.

La structure de données précitée représentée au tableau précédent peut comporter, pour chaque action, une variable d'identification de l'action, de type de l'action, c'est-à-dire ce sur quoi celle-ci porte, de nom de l'action, et pour chaque plate-forme PL, au moins une variable booléenne dont la valeur est vraie si cette action est disponible pour cette plate-forme, une variable de description de l'action si celle-ci est disponible pour la plate-forme PL considérée, par exemple le nom de la fonction ou de la procédure à appeler.

En ce qui concerne les fontes de caractères disponibles FO sur une plate-forme ou terminal d'accès considéré, la structure de données est représentée au tableau 4.

Pour les fontes disponibles, on indique que la structure de données FO, pour chaque fonte, peut contenir un identifiant de la fonte, le nom de la fonte et, pour chaque plate-forme, une référence de la fonte pour la plate-forme considérée, ou plate-forme cible, telle que, en fonction du système d'exploitation de celle-ci, *OPEN TV,* Internet : nom de fonte + taille et de type MAC OS comprenant un identificateur de fonte ainsi que le nom de fonte + la taille.

En ce qui concerne les structure de données relatives aux événements, pour chaque plate-forme, on rappelle que les événements peuvent être internes ou externes lorsqu'ils sont provoqués par la sélection d'une touche sur un clavier par un utilisateur par l'introduction d'une carte à mémoire ou la réception d'un message par exemple, ainsi que mentionné précédemment dans la description.

Dans ces conditions, la structure des données relative à la liste des événements EV pour chaque plate-forme est donnée par le tableau 5.

Relativement aux événements, on indique que pour chaque événement, la structure de données peut être définie par un identifiant de l'événement, un type de l'événement selon ce qui engendre l'événement, un nom de l'événement, ainsi que par des paramètres relatifs au type d'événement considéré.

En outre, pour chaque plate-forme PL, peuvent être définies une variable booléenne à la valeur vraie si l'événement est disponible pour cette plate-forme et, si cet événement est disponible, une variable de description de l'événement pour la plate-forme PL considérée.

En ce qui concerne les données DO décrivant et caractérisant l'environnement de la plate-forme terminale, leur structure de données correspondante peut correspondre à celle donnée dans le tableau 6.

Pour chaque donnée, cette structure de données relative aux données DO peut contenir un identifiant de la donnée, désigné par DATA-ID, une origine de la donnée, un type de la donnée et un nom de la donnée. De même que dans le cas de la structure de données relative aux événements, pour chaque plate-forme PL, peuvent être définies une variable booléenne à la valeur vraie si la donnée est disponible pour cette plate-forme, ainsi qu'une description de cette donnée pour la plate-forme considérée si cette donnée est disponible. Cette description peut consister en le nom de la fonction API pour *Application Protocol Interface* qui retourne la donnée précitée.

Le tableau 6 précédemment mentionné peut contenir des données liées à différentes API, par exemple des données liées à n systèmes de signalisation d'une voie de données, des données contenues dans une carte à mémoire ou encore des données relatives aux émission de télévision à travers le système d'information défini par la norme DVB, pour *Digital Vidéo Broadcasting.*

D'autres structure de données supplémentaires peuvent être définies pour chaque application ou groupe d'applications, de manière à permettre la mise à jour des données propres à une application par l'intermédiaire d'un automate par exemple. Cette structure de données supplémentaire ne sera pas décrite en détail.

D'une manière générale, et selon un aspect particulièrement remarquable du système de développement d'applications interactives, objet de la présente invention, l'ensemble des couples événement/action constitue l'application interactive, au moins sous forme native précédemment mentionnée dans la description, dans la mesure où cet ensemble définit la suite des enchaînements nécessaires à la représentation de cette application interactive.

Dans ce but, le module COR de commande de mise en corrélation d'une pluralité de couples événement/ action comporte un module générateur d'une série d'instructions présentant une structure de contrôle de type liste de requêtes pour un événement donné vis-à-vis duquel une relation de type IF (condition) sur toute variable booléenne $B_i$ appartenant à un ensemble de variables booléennes $[B_0,B_1,...,B_j,B_N]$ est vraie *THEN* (alors), l'action est alors réalisée, *EVENEMENT* désignant une variable représentative d'un événement donné et *ACTION* désignant une variable représentative d'une action conditionnée à l'ensemble des variables booléennes précité.

On rappelle que la variable *"EVENEMENT"* constitue pour chaque couple événement/action une rupture d'équilibre d'état du système d'exploitation, alors que l'action constitue une initialisation ou une modification d'au moins un des paramètres d'affichage et de représentation d'une ou plusieurs scènes constitutives de l'application interactive considérée.

Ainsi, l'ensemble des couples événement/action est organisé selon une suite de lignes de macro-instructions comprenant chacune un champ de position d'exécution, un champ d'événement, un champ d'action, un champ de liste de conditions, et un champ variables booléennes d'arrêt.

Le jeu de macro-instructions précité constitue ainsi un langage de très haut niveau de conception, adapté à l'audiovisuel, quelque soit le moteur interactif utilisé et permettant une mise en oeuvre particulièrement originale.

D'une manière générale, l'ensemble des événements peut être constitué en une table des événements. Une table des événements est donnée dans le tableau 7.

Dans le tableau 7 précité, chaque événement comporte une désignation mnémotechnique, un numéro d'identification de 1 à 18, le nombre 18 n'étant bien entendu pas limitatif, une référence de type, une liste de paramètres et des commentaires d'événements, en particulier de l'origine de l'événement considéré.
Les événements ci-après sont ainsi introduits :

- 1 : Keynav,
- 2 : KeyNum,
- 3 : KeyOK,
- 4 : KeyHome,
- 5 : KeyBack,
- 6 : AppliStart,
- 7 : SceneOpen,
- 8 : TimerExpired,
- 9 : SceneClosed,
- 10 : event1,
- 11 : event2,
- 12 : event3,
- 13 : event4,
- 14 : event5
- 15 : MpegAff,
- 16 : InsertCard,
- 17 : RemoveCard,
- 18 : Receptmodem.

Les commentaires correspondent à un commentaire de la définition mnémotechnique de l'événement donné précédemment en référence au numéro d'identification précité, ainsi que mentionné dans le tableau 7 précédent.
De la même manière, l'ensemble des actions peut être organisé sous forme d'une table des actions donnée dans le tableau 8.
De même que pour les événements, chaque action comprend une définition mnémotechnique de l'action, un numéro d'identification, un type de l'action, un nombre de paramètres, et des commentaires relatifs à l'action considérée. Dans le tableau 8, 21 actions spécifiques ont été introduites de manière non limitative, accompagnées de deux actions auxiliaires correspondant à des opérations arithmétiques dans les conditions qui seront données ci-après :

- 1 : Setbg,
- 2 : PlayS,
- 3 : PlayA,
- 4 : PutInto,
- 5 : AddTo,
- 6 : GoScene,
- 7 : GoBack,
- 8 : DesigneOpt,
- 9 : LounchApp,
- 10 : QuitApp,
- 11 : ShowObj,
- 12 : HideObj,
- 13 : SetTimer,
- 14 : Selectserv,
- 15 : StopTimer,
- 16 : Mute,
- 17 : Unmute,
- 18 : gl_actn,
- 19 : ReadUA,
- 20 : Phone,
- 21 : Nothing,

Les opérations arithmétiques sont désignées par Addto, Multo et Divto respectivement et correspondent à la multiplication, respectivement à la division entre deux entiers numériques. D'autres opérateurs peuvent être prévus, tels que Modulo, reste de la division entière, soustracto soustraction, pour des opérations de calcul, ou Speak Writer pour la gestion d'un module de synthèse de la parole, afin d'introduire la notion de restitution d'une voix à partir d'un fichier texte et d'une voix.

Les commentaires des actions 1 à 21 correspondent à la désignation mnémotechnique telle que donnée dans le tableau 8 précédent.

Ainsi, en référence à la structure de chaque ligne de macro-instructions comprenant chacune un champ de position d'exécution, un champ événement, un champ options, un champ de liste de conditions et un champ variable booléenne d'arrêt, on indique que, en référence à la position d'exécution, les lignes de macro-instructions sont exécutées séquentiellement en partant de la position 1. Ainsi, en référence à la table des événements, Tableau 7, et à la table des actions, Tableau 8, l'action est exécutée sous contrôle de la structure de contrôle précédemment mentionnée dans la description.

Cette structure de contrôle peut être résumée de la façon ci-après. Si *(IF)* la condition est réalisée, alors (*THEN*) l'action de la ligne de macro-instructions est alors exécutée.

En ce qui concerne la condition, on indique que cette condition peut consister en une comparaison d'égalité stricte, de supériorité, d'infériorité ou égalité, supériorité ou égalité entre deux valeurs numériques ou entre deux valeurs contenant des chaînes de caractères.

Dans le cas où la variable booléenne d'arrêt n'est pas à la valeur vraie, le pilote exécute la ligne suivante. Sinon, le pilote arrête l'exécution de l'ensemble des lignes de macro-instructions constitutives de l'ensemble des couple événement/action mis en corrélation.

On indique que le nombre de lignes d'exécution, c'est-à-dire de nombre de lignes de macro-instructions, n'est pas limité.

Une description plus détaillée de la structure des données d'une application interactive quelconque sera maintenant donnée dans la description.

En référence à la figure 1c, on rappelle qu'une application interactive est composée d'une ou plusieurs scènes.

Selon un aspect remarquable du système de développement d'applications interactives, objet de la présente invention, les structures de données relatives à une application interactive déterminée sont définies sur deux niveaux distincts :

- un niveau application proprement dit, définissant la structure de données commune à toutes les scènes ;
- un niveau scène définissant la structure de données propre à une scène déterminée.

Chaque application comporte une structure caractérisant l'identification d'une application, structure de données désignée par AP.

La structure de données AP précitée est donnée dans le tableau 9.

Pour chaque application AP donnée, les attributs de l'application sont définis par des variables relatives à la description de l'application, au nom de l'auteur et de mention de droit d'auteur, désignée par mention de Copyright, au nom de l'application, à la version de l'application et à la définition de la palette de couleurs utilisée telle qu'une palette de couleurs par défaut ou définie pour une scène déterminée, une variable de données contenant un numéro d'identification de la scène de départ, en l'absence de numéro d'identification de scène de départ la valeur de défaut et la valeur du menu sont définies par HOME, une variable de couleur de transparence de l'application et, pour chaque plate-forme PL d'accès considérée, une variable de type booléen, laquelle, à la valeur vraie, indique si l'application devra être engendrée pour la plate-forme PL considérée.

Afin d'assurer un haut degré de convivialité des applications interactives développées, l'ensemble des palettes de couleurs utilisées dans une application est géré par une structure de données particulière PA, chaque scène étant susceptible d'utiliser une palette de couleurs.

La structure de données PA définissant une palette de couleurs est composée de n couleurs qui sont choisies parmi une liste des couleurs notée CO. En général, une application n'utilise qu'une palette par application interactive considérée. La liste PA des palettes utilisées par l'application est définie au tableau 10.

Pour chaque palette de couleurs gérée par l'application interactive considérée, celle-ci comprend une variable identifiant de la palette de couleurs considérée, une variable de nom de la palette pour faciliter l'édition et une liste de 15 couleurs en l'absence de couleur transparente vidéo dans le cas où le système *OPEN TV* est utilisé, enfin, un identifiant de la couleur associé à une position dans la palette considérée. Les noms des variables correspondants sont indiqués au tableau 10.

En outre, une structure de données spécifique, notée BG, définit le fond d'une scène de l'application interactive considérée. A titre d'exemple non limitatif, on indique que les types de fond peuvent être constitués par un fond de couleur, un fond vidéo, une image fixe telle qu'une image fixe de type MPEG2. D'autres types de fond peuvent être définis tels qu'un fond de type composé pouvant contenir une image fixe en millions de couleurs, ou un fond vidéo ou un fond de couleur suivant le palette utilisée, ainsi qu'un ensemble d'objets ou composants à contenu visuel tels qu'une image, un graphique de couleur, un texte ou une palette de couleurs.

La structure de données définissant, le fond d'une scène BG est donnée au tableau 11.

La liste des fonds utilisée par l'application est définie pour chaque fond engendré par une variable identifiant du fond, une variable de type de fond, une variable de valeur de fond selon le type et une variable spécifique, obligatoire, si le type de fond correspond à celui d'une image de type MPEG par exemple, ainsi enfin qu'une variable de nom du fond pour faciliter l'édition. Les variables précitées sont définies par une définition mnémotechnique correspondante donnée au tableau 11.

En ce qui concerne la variable de type de fond, celle-ci peut comporter plusieurs sous-variables données au tableau 12, telles qu'une couleur unie, une transparence au signal vidéo, une image mpeg en arrière-plan ou une image en mode point par exemple.

Le contenu des fonds utilisés par une application interactive développée grâce au système de développement rapide, objet de la présente invention, ainsi que le contenu des objets constitutifs de ces scènes, fait appel à des médias pour constituer en fait des objets virtuels ou ensemble de composants précédemment mentionnés dans la description qui, bien entendu, doivent être présents ou seront présents lorsque la scène est composée ou représentée.

En ce qui concerne les médias, on rappelle que ceux-ci, dans le cadre de la mise en oeuvre du système de développement d'applications interactives, objet de la présente invention, sont définis comme des ressources externes et peuvent être répertoriées en fonction du lecteur audio ou vidéo transmettant l'information destinée à l'utilisateur suivant les types ci-après :

- Audio : nom de ressource/attribut de codage/taille mémoire ;
- Vidéo : nom de ressource/attribut de codage/taille mémoire ;
- Texte speech :nom de ressource / attribut de vitesse / taille mémoire ;
- Image fixe naturelle : nom de ressource/taille mémoire ;
- Image graphique : nom de ressource/taille mémoire/palette de couleurs.

La structure de données relative aux médias ME n'est autre qu'une liste des médias mise en oeuvre pour l'application interactive considérée. La structure de données correspondante est donnée dans le tableau 13 pour chaque média géré par cette application interactive précitée.

Les données précitées comportent une variable d'identification du média, une variable de type du média, une variable de mise à jour, une variable de type booléenne, laquelle, lorsqu'elle est à la valeur vraie, permet de revenir à la mise à jour, en l'absence de média, et, enfin, une variable d'utilisation lorsque le média est externe, c'est-à-dire éditable en mode exploitation. En outre, pour chaque plate-forme ou terminal d'accès à l'application interactive considérée, plate-forme PL, la structure de données précitée comporte une variable de référence du média pour une plate-forme donnée, une variable de structure interne, une variable d'identification de la référence, une variable de rappel de la plate-forme de cette référence et une variable de format du média référencé, une variable de taille physique du média considéré, une variable de taille mémoire en vue du préchargement et une variable de référence du média pour la plate-forme considérée. La plate-forme peut, ainsi que mentionné précédemment dans la description, consister en une plate-forme, c'est-à-dire en un terminal d'accès de type MacOS, le chemin d'accès complet sur le disque étant indiqué, ou de type Internet URL ou de type *OPEN TV*, nom du fichier contenant le média considéré, et enfin une variable de nom de média.

Une application interactive développée conformément à la mise en oeuvre du système, objet de la présente invention, peut faire souvent appel à des variables dont le contenu peut varier pendant le déroulement de l'application. Il peut s'agir par exemple, pour chaque scène indexée, d'une valeur numérique indexée de la valeur 1 dans une variable de comptage. Ces variables constituant des variables numériques de gestion de l'application, et en particulier du caractère interactif de celle-ci, sont désignées par des variables dont la structure de données VA est donnée dans le tableau 14.

En référence au tableau précité, pour chaque variable, il peut être défini au moins une variable de type texte, une variable d'identification de la variable de gestion considérée, une valeur d'origine de la donnée, une valeur de type de variable et une valeur de nom de variable ainsi que des lignes de texte ou nombres entiers correspondants. En ce qui concerne le type de la variable considérée, on indique que celle-ci, en référence au tableau 12, peut contenir toute chaîne de caractères de type "txt" ou un nombre entier de type "num".

Les scènes d'une application interactive font appel à la définition d'objets virtuels décrits au niveau de cette application. L'objet virtuel peut être défini comme un conteneur dont les caractéristiques et les attributs seront décrits ultérieurement dans la description en liaison avec la description des structures de données relatives à une scène.

Selon un mode d'organisation remarquable des structures de données du système de développement d'applications interactives, objet de la présente invention, ces structures de données peuvent comporter avantageusement une liste des objets, virtuels, d'interface communs à toutes les scènes. Cette liste est désignée par OC et la structure des données correspondante est donnée dans le tableau 15.

En référence au tableau précité, pour chaque objet virtuel commun, la structure des données correspondante peut comporter une variable de description de l'objet commun et une variable de structure unitaire de description de cet objet.

En ce qui concerne la gestion des macro-commandes constitutives du langage de haut niveau descriptif de l'application, on indique que l'ensemble des couples événement/action peuvent être décrits par une structure de données relative aux lignes événement/action attachées à l'application interactive considérée, cette structure de données, pour chaque ligne, et donc pour chaque action de l'application considérée, désignée par structure de données AA, est donnée dans le tableau 16.

Dans la structure de données précitée, les lignes événement/action attachées à l'application interactive peuvent comporter avantageusement une variable de numéro d'ordre de l'action, une variable de description de l'action relative à l'application considérée ainsi qu'une variable de structure unitaire de description d'une action, ainsi qu'il sera décrit ultérieurement dans la description.

Une description plus détaillée des structures de données mises en oeuvre pour la description d'une scène constitutive d'une application interactive développée grâce à un système de développement rapide d'applications interactives, objet de la présente invention, sera maintenant donnée en liaison avec les tableaux 17 à 25.

Par définition, une application interactive est constituée par une pluralité de scènes, la scène considérée étant désignée par scène courante.

Selon un premier aspect remarquable du système de développement d'applications interactives, objet de la présente invention, celui-ci comporte une structure de données d'identification de la scène courante, cette structure de données, notée SC, étant donnée par le tableau 17.

La structure de données précitée contient les attributs propres à la scène courante considérée et peut comporter avantageusement une variable d'identification de la scène. Il existe toujours au moins une scène, une scène de référence, encore désignée par scène d'accueil, correspondant à une page HOME de l'application interactive par exemple, une variable de nom de scène, une variable de palette de couleurs, cette variable pouvant correspondre à la variable palette de couleurs de l'application ou à une variable de palette de couleurs différente, spécifique à la scène, une variable d'identifiant du fond, une variable de position de départ du curseur et, enfin, une variable booléenne, laquelle, lorsque celle-ci est à la valeur vraie, permet le retour à la dernière option de la scène considérée.

D'une manière générale, on indique que la composition bidimensionnelle de chaque scène courante de l'application interactive est effectuée à partir de conteneurs définissant les objets virtuels, ainsi que mentionné précédemment dans la description.

La description d'un objet virtuel, c'est-à-dire du conteneur précité et de ses attributs, sera maintenant donnée en liaison avec les tableaux 18 à 24.

D'une manière générale, on indique que la gestion des objets virtuels met en oeuvre une structure de données comportant au moins :

- une table des objets dont la structure de données, désignée par OS, est donnée dans le tableau 18.

Le tableau précité définit une liste des objets d'interface de la scène courante et peut comprendre, pour chaque objet, une variable de description de l'objet et une variable de structure unitaire de description de cet objet.

La description d'un objet comporte en outre une structure de données relative à l'ensemble des couples événement/action pour la scène courante considérée, cette structure de données étant notée AS et décrite par le tableau 19.

Pour chaque action de la scène courante précitée, cette structure de données peut comprendre une variable de numéro d'ordre de l'action relative à la scène, une variable de description de l'action relative à la scène et une variable de structure unitaire de description d'une action.

En outre, et de même que pour le niveau application, la structure de données relative à la définition des objets virtuels d'une scène peut contenir avantageusement une structure de données définissant une liste de phrases constituant en fait un dictionnaire de la scène. Cette structure de données, notée PS, est décrite dans le tableau 20.

La structure de données précitée constitue une liste des phrases attachées à la scène courante et peut comporter, pour chacune des phrases correspondantes, une variable identifiant de la phrase considérée, une variable origine de la donnée, tel que le nom du pilote générateur de cette donnée et du mode d'acquisition en lecture par exemple, une variable de type de phrase, ce type de phrase étant par exemple de type texte "txt", une variable du nom de la phrase, une variable réservée pour saut de ligne et une variable de ligne de texte.

En ce qui concerne la description de chaque objet virtuel relatif à la scène ou le cas échéant à une application considérée, objet virtuel considéré comme une structure unitaire, une structure de données détaillée permettant la description de ce conteneur ou objet virtuel est prévue afin de décrire l'objet virtuel correspondant, selon le tableau 21.

Chaque objet virtuel, défini selon la structure de données précédente, constitue une structure unitaire permettant de définir la description d'un objet relatif à la scène courante ou, le cas échéant, à une application, et peut comporter par exemple une variable d'identification de l'objet, une variable de niveau d'affichage de cet objet, soit en fond de scène, soit en avant-scène, une variable de type d'affichage d'objet, le type d'affichage étant dit statique lorsque l'objet est un objet relatif à l'application et pouvant être soit statique, soit dynamique lorsque l'objet est relatif à la scène courante d'une application considérée, une variable d'attribut selon le type d'affichage, une variable de type d'objet, une variable de nom de l'objet, de préférence en l'absence de virgule, et une variable d'attribut de l'objet selon le type. Le conteneur ou objet virtuel précité comporte également une structure de données définissant l'attribut d'affichage de cet objet virtuel défini selon le tableau 22.

Cette structure de données définit les valeurs possibles pour l'attribut d'affichage de l'objet virtuel considéré et peut comporter une variable d'affichage direct sans condition, une variable d'affichage par l'intermédiaire des actions de type, c'est-à-dire affichage dynamique ou statique, et une variable d'affichage conditionné au numéro d'option du curseur sur l'écran d'affichage.

De même, une structure de données relative à la description de l'attribut du contenu de l'objet virtuel ou conteneur est décrite selon le tableau 23.

La structure de données précitée est constituée par une liste définissant le type d'objet et pouvant comporter une variable désignant une image de type mode point, une image graphique engendrée en l'absence de média externe et une variable désignant un objet de type texte.

En outre, une structure de données permet de définir la position du conteneur dans la scène selon le tableau 24.

La structure de données précitée permet de définir les positions de l'objet en fonction du type d'objet, les positions X et Y et dimensions de largeur maximale et de hauteur maximale étant définies par rapport au numéro de pixel du moniteur d'affichage simulé MS, et donc en définitive du moniteur de la plate-forme ou terminal d'accès à l'application interactive considérée.

Enfin, chaque scène courante et le cas échéant chaque application comporte avantageusement une structure de données descriptive du couple événement/action, cette structure de données permettant la description d'une ligne de macro-commandes telle que décrite précédemment dans la description relativement à la scène courante ou le cas échéant à une application, selon le tableau 25.

Cette structure de données peut comporter avantageusement une variable d'identification de l'événement déclenchant, une variable de paramètre de l'événement, l'événement pouvant correspondre à l'un des événements tels que décrits au tableau 7 précédemment introduit dans la description par exemple, une variable de type booléen pour un événement de type continu, une valeur par défaut étant alors attribuée, une variable d'identification de l'action à déclencher, une première et une deuxième variable ou paramètres de description de l'action selon le type d'action considéré. En outre, pour chaque condition et afin d'assurer la gestion de la condition précitée, la structure de données comporte une variable de référence à une condition et une structure interne comprenant au moins une variable d'identification de la condition, une variable de gestion de la condition selon le premier chiffre et une variable de valeur pour exécution de l'action.

La règle de gestion du couple événement/action décrit par la structure de données précédente est réalisée par l'intermédiaire de la variable Act-Pass, et, à la valeur non vraie, l'action correspond à l'action Go-Scene du tableau 8, c'est-à-dire à l'initialisation d'une scène ou au changement de scène ainsi que mentionné précédemment dans la description.

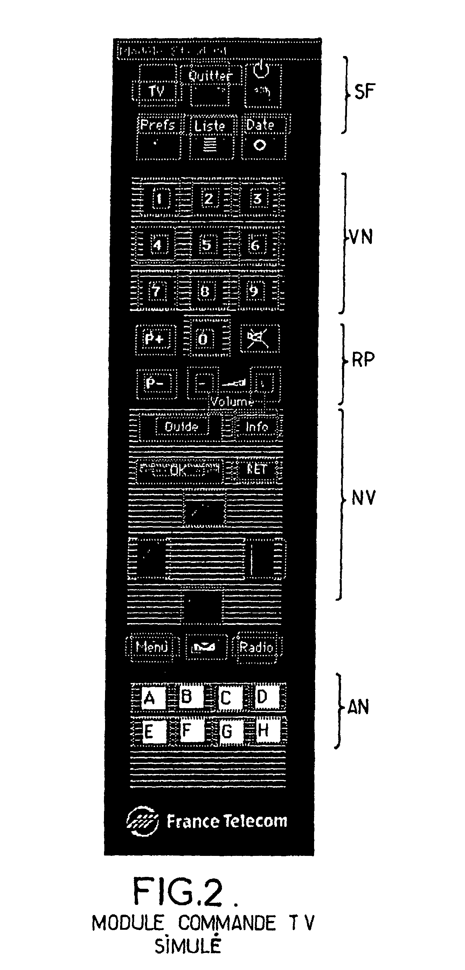

Une description plus détaillée d'éléments particulièrement remarquables du système de développement rapide d'applications interactives, objet de la présente invention, sera maintenant donnée en liaison avec la figure 2 et les figures suivantes.

D'une manière générale, on indique que ces éléments remarquables sont constitués par des éléments logiciels dont les pages écran, interface entre l'utilisateur du système de développement rapide d'applications interactives, objet de la présente invention, avec l'utilisateur, présente des caractéristiques fonctionnelles spécifiques liées aux structures de données précédemment décrites dans la description.

En particulier, dans le cas où le moniteur d'affichage, le module de commande et le système d'exploitation de la plate-forme cible ou terminal d'accès sont ceux d'un récepteur de télévision, l'éditeur électronique E permet la simulation de l'écran d'affichage de ce récepteur de télévision et de l'interface de commande d'un module de télécommande universelle associé à ce récepteur de télévision, ainsi que représenté en figure 2.

De structure classique, le boîtier à boutons comportant, ainsi que représenté sur la figure précitée, des boutons spécifiques de sélection de fonctions, désignée par SF, des boutons de sélection de valeurs numériques, désignée par VN, des boutons de réglage de programmes RP, des boutons de navigation flèche en haut, flèche en bas, à droite et à gauche, notés NV, et des boutons de codage de caractères alphanumériques AN, des boutons de menus et de radios par exemple, aux touches précédentes de nom correspondant sont associés les événements selon le tableau 26 de correspondance.

On comprend ainsi qu'à chaque touche correspondante dont le nom est indiqué au tableau et représenté au dessin est en fait associé un événement selon la désignation mnémotechnique de cet événement. Ainsi, pour la gestion du module de télécommande, constituée par une boîte à boutons, à chaque bouton de cette télécommande peut être associé un événement de la liste des événements introduits selon le tableau 7. A titre d'exemple, au bouton OK peut être associé l'événement KeyOK ou n'importe quel autre événement tel que AppliStart, TimerExpired par exemple. Cette gestion est réalisée grâce à un module logiciel qui permet d'effectuer des affectations croisées. Le module de télécommande permet ainsi de simuler tout module externe qui serait susceptible de produire une interaction.

Lorsque le module de commande et le système d'exploitation sont ceux d'une station de travail ou d'un ordinateur, l'éditeur électronique E permet la simulation de l'écran d'affichage de ce micro-ordinateur et de l'interface de commande d'un appareil périphérique d'entrée de ce micro-ordinateur, tel que par exemple le clavier. A une touche spécifique de cet appareil périphérique d'entrée est associé un événement provoquant la rupture d'équilibre de l'état du système d'exploitation. On comprend en particulier que les événements mentionnés au tableau 26 peuvent alors être associés à des touches spécifiques du clavier précité. De la même manière que dans le cas de la figure 2, lorsqu'un module de télécommande universelle associé à un récepteur de télévision est utilisé, la correspondance entre événements et touches du clavier est réalisée de manière logicielle. Une telle mise en correspondance ne sera pas décrite en détail car elle correspond à une opération de même nature que dans le cas de la figure 2.

Une description plus détaillée d'un ensemble d'outils logiciels constitutifs du système de développement rapide d'applications interactives, objet de la présente invention, sera maintenant donnée en liaison avec les figures $3a_1$, $3a_2$, $3a_3$ à $3j_i$, $3j_2$.

La notion d'outil logiciel recouvre, conformément à l'objet de la présente invention, un ensemble de pages écran permettant de constituer de manière particulièrement souple les structures de données précédemment décrites dans la description. On comprend en particulier que les pages écran précitées constituent une interface pour l'utilisateur du système de développement rapide d'applications interactives, objet de la présente invention, afin de permettre à ce dernier de constituer les structures de données précédemment décrites dans les conditions de format et d'interopérabilité de ces structures de données nécessaires à la constitution d'applications interactives de type natif par exemple.

En référence à la figure 1a, on indique que l'éditeur électronique E, le module générateur d'objets virtuels GOV spécifique à l'application et le module de commande de mise en corrélation d'une pluralité de couples événement/action COR, comportent avantageusement un module logiciel pilote permettant notamment, à partir d'une fenêtre d'affichage d'une représentation du module de commande simulé MCS, et le cas échéant d'appareils périphériques, de recevoir une variable *"EVENEMENT"* correspondante, ainsi qu'à partir d'une fenêtre d'affichage de scènes constitutives de l'application interactive en cours de développement, de provoquer, soit l'initialisation, soit la modification de la scène considérée, par l'intermédiaire d'une variable *"ACTION",* tel que mentionné précédemment dans la description.

On comprend toutefois que le module logiciel pilote comprend une pluralité d'outils logiciels, chaque outil logiciel étant sensiblement associé à au moins une fenêtre d'affichage permettant le développement des structures de données précédemment décrites dans la description par l'utilisateur du système de développement rapide d'applications interactives, objet de la présente invention.

Les fenêtres essentielles associées aux outils logiciels correspondants seront maintenant décrites en liaison avec les figures $3a_1$ à $3j_2$ ci-après.

Selon un premier aspect remarquable du système, objet de la présente invention, celui-ci comporte un outil de création de macro-instructions, lequel comporte au moins une page écran de mise en corrélation de couples événement/action, l'ensemble des pages écran essentielles associé à l'outil précité étant représenté en figures $3a_1$, $3a_2$ et $3a_3$.

En référence aux figures précitées, on indique que les pages écran successives comprennent au moins une fenêtre d'affichage d'un ensemble d'événements, désigné par liste des Ev/Actions, une fenêtre d'affichage d'une action déclenchée associée à l'un des événements de cet ensemble d'événements et au moins une fenêtre de paramétrage de l'action déclenchée, ces fenêtres étant notées Param 1, Param 2 sur les figures précitées. Un dispositif de pointage et de sélection, tel que par exemple le pointeur commandé par une souris, est prévu, ce dispositif étant géré par le système d'exploitation du micro-ordinateur hôte constitutif du système de développement rapide, objet de la présente invention. Ainsi, la mise en corrélation de couples événement/action peut être effectuée par sélection d'un événement parmi l'ensemble des événements et de l'action par l'intermédiaire du pointage.

Sur les figures $3a_1$, $3a_2$ et $3a_3$, on a représenté la sélection successive dans la fenêtre Liste des Ev/Actions d'un événement représenté par la désignation mnémotechnique des événements telle que donnée en figure 2 ou au tableau 7 précédemment mentionné dans la description. L'action peut être alors effectuée par sélection dans la fenêtre action déclenchée d'une action telle que l'action désignée par GoScène. Sur les figures $3a_1$, $3a_2$ et $3a_3$, les différentes fenêtres sont reliées par des traits continus aux champs des macro-instructions ou lignes d'instructions constitutives des scripts. La figure $3a_1$ représente ainsi la création de la ligne de script 1, la figure $3a_2$ celle de la création de la ligne de script 2 et celle de la figure $3a_3$ celle de la ligne de script 3 à partir des événements affichés dans le fenêtre de liste des Ev/Actions et sélection de chaque événement successivement, puis de l'action correspondante, ainsi que des paramètres dans les fenêtres Param 1 par exemple.

L'outil de création de macro-instructions décrit précédemment permet ainsi d'engendrer la structure de données correspondant aux macro-instructions et de gérer les conditions de déclenchement des actions ainsi programmées. En mode édition, l'outil précité permet également de supprimer les conditions de déclenchement, d'effacer une ligne de macro-instructions par le bouton Supprimer. Cet outil effectue ainsi une auto-corrélation sur les paramètres ainsi que sur les champs, le choix des paramètres dans les fenêtres de paramètres Param 1 et Param 2 n'étant proposé que par l'intermédiaire de menus que lorsqu'ils existent comme paramètres du champ actions.

De même, le type de la donnée introduite dans la fenêtre Param 1 impose un choix directif dans la fenêtre Param 2. A titre d'exemple, si la fenêtre Param 1 est chargée par une variable de type texte, la fenêtre Param 2 ne peut être que du type texte et l'éditeur ne propose donc que des valeurs de même type.

Grâce à la mise en oeuvre de l'outil précité, les erreurs de programmation sont ainsi minimisées, l'utilisateur-concepteur ne pouvant pas écrire une ligne de macro-commandes non exécutable. Enfin, les lignes de macro-commandes sont hiérarchisées, la ligne 1 étant toujours exécutée en premier. Lorsque dans la fenêtre action déclenchée est choisie l'action GoScreen, une telle action provoque automatiquement un arrêt d'exécution de la macrocommande.

Le module pilote comporte également un outil logiciel de création d'objets virtuels dont les pages écran essentielles sont représentées en figures $3b_1$ et $3b_2$.

Ainsi que représenté sur les figures précitées, l'outil de création d'objets virtuels comporte au moins une page écran de création d'objets comprenant au moins une fenêtre d'affichage d'une liste d'objets accessibles. Cette liste d'objets système correspond à une liste des objets d'interface et est affichée selon une succession de ces objets et un champ de niveau, la succession des objets constituant un champ de désignation d'objets. En outre, la page écran de création précitée comporte une fenêtre de choix de mode d'affichage/représentation de cet objet, un champ de type d'objet permettant de discriminer la nature de cet objet, une fenêtre de type d'objet permettant d'engendrer un champ de type d'objet permettant de discriminer la nature de cet objet, ainsi qu'une fenêtre relative à un ensemble de paramètres fonction du média d'affichage/représentation de cet objet, cette fenêtre étant représentée sur les figures $3b_1$ et $3b_2$ par des fenêtres auxiliaires, des fenêtres de position X, Y, de hauteur et de largeur du média considéré.

Sur les figures $3b_1$ et $3b_2$, on a représenté la définition concrète de deux objets, la correspondance entre les éléments introduits à partir de l'outil logiciel de création d'objets et la structure de données correspondante, et en particulier la structure de données OC-(AllData) décrite dans le tableau 15 précédemment dans la description.

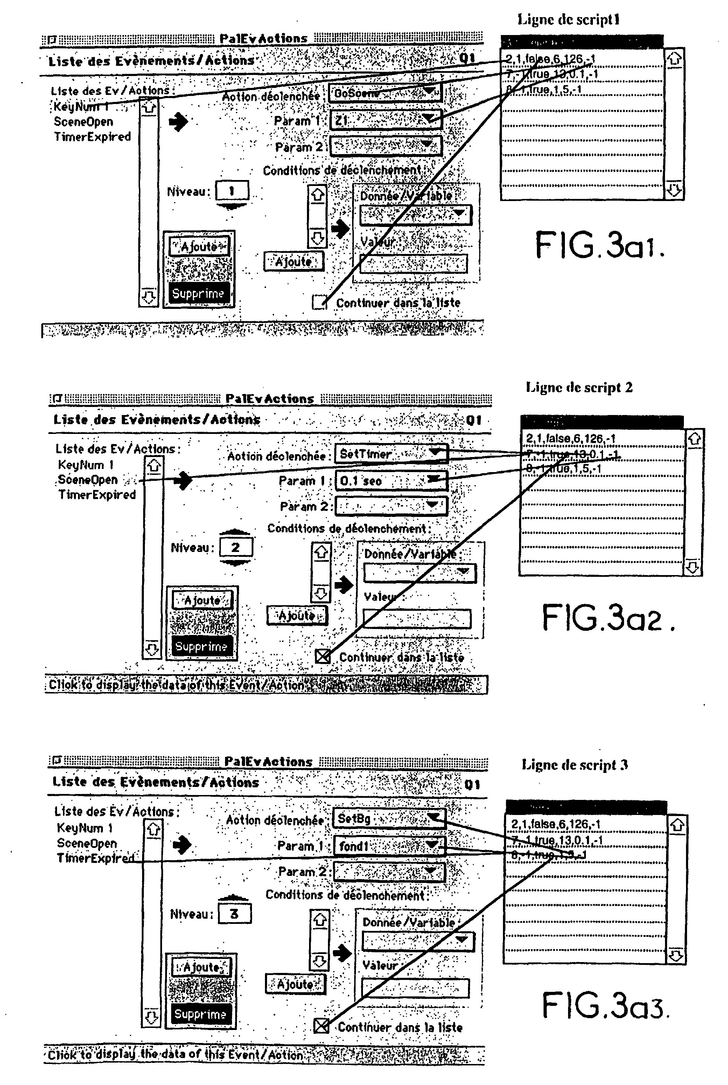

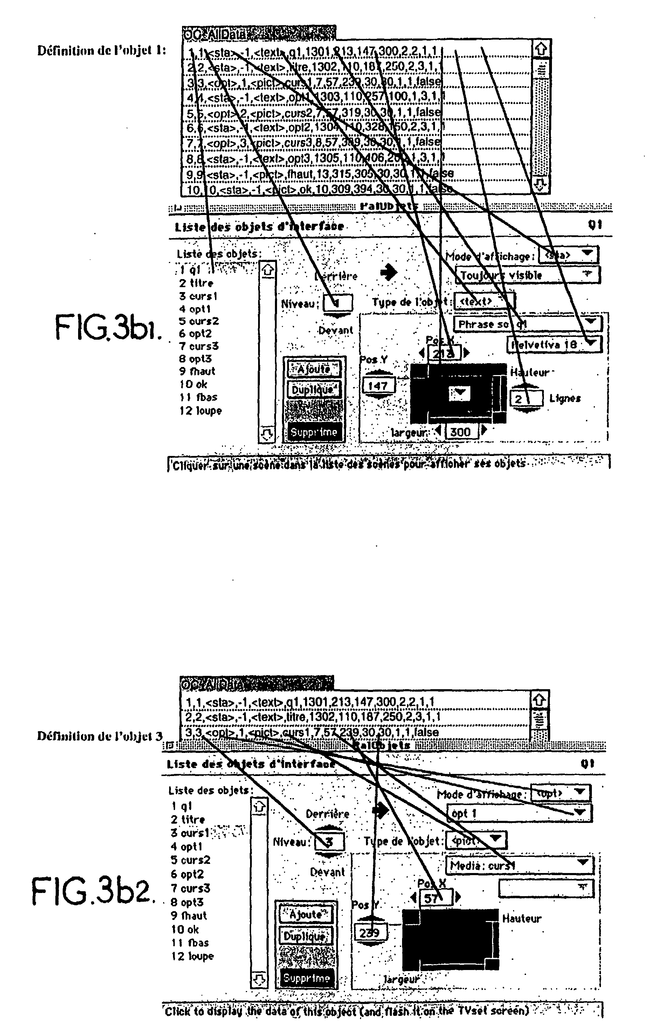

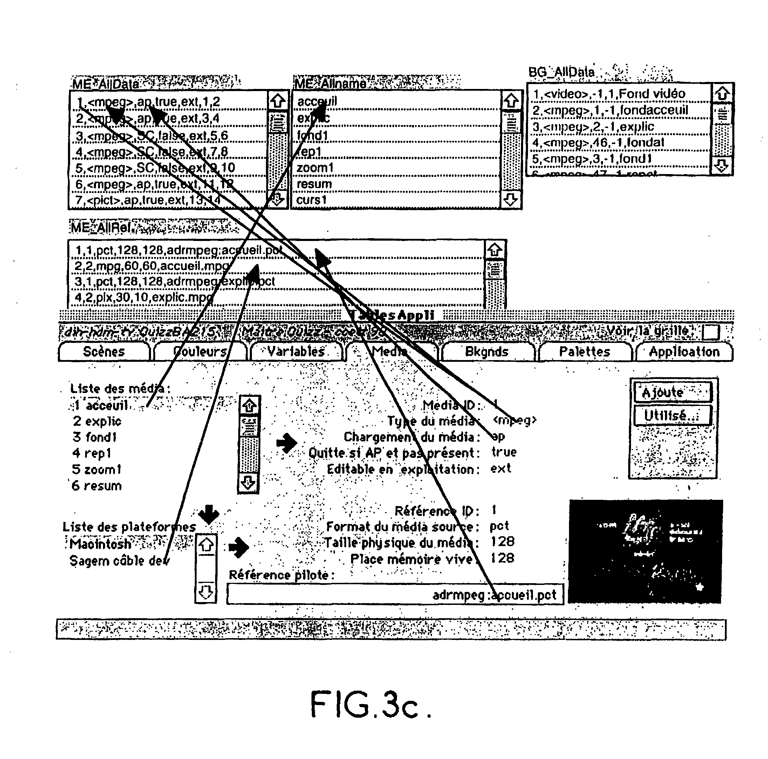

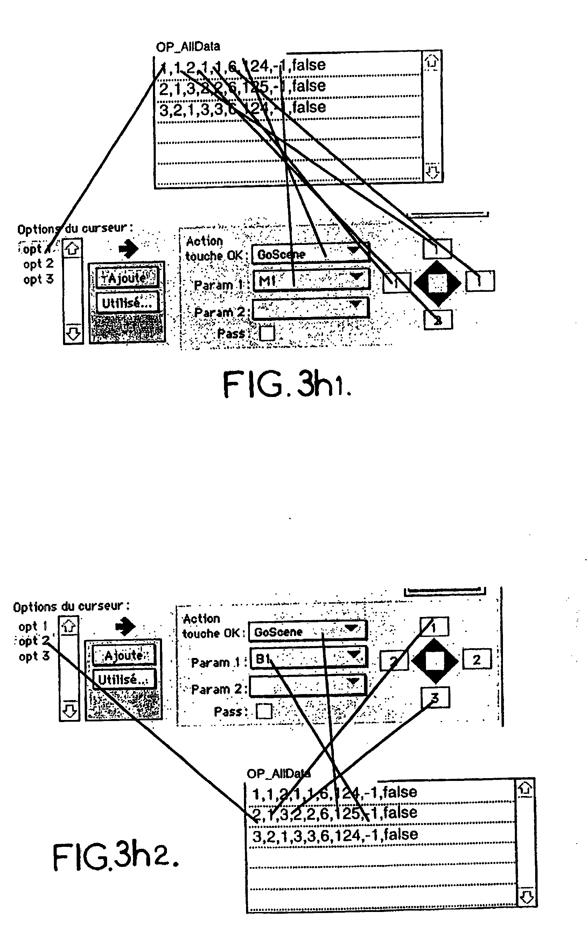

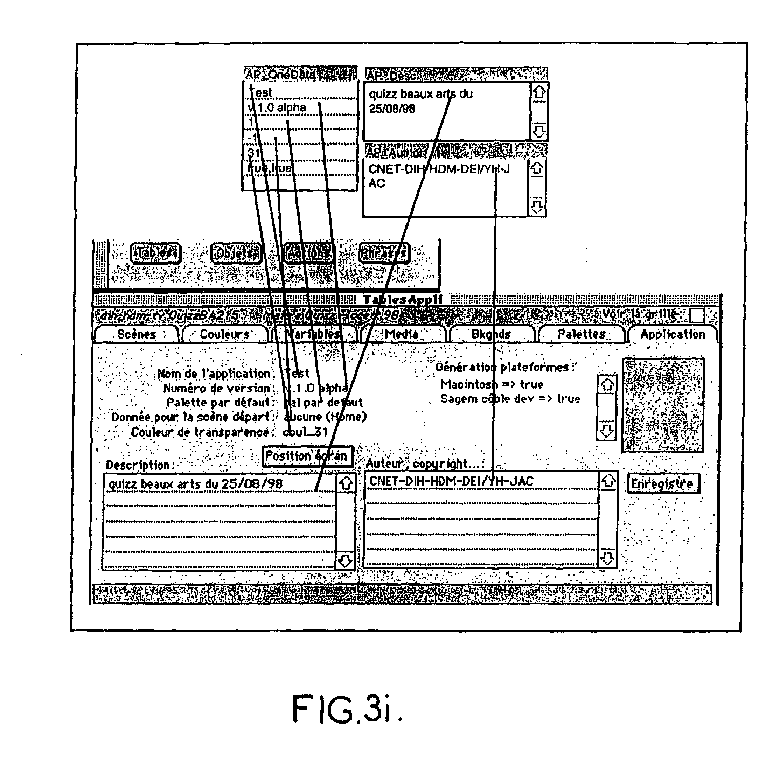

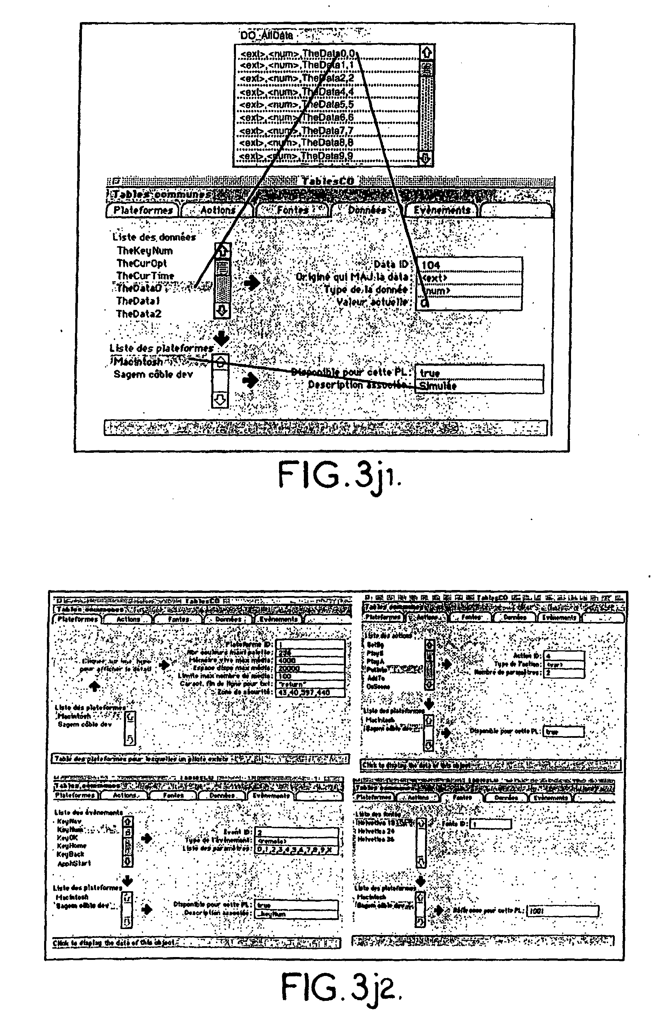

En outre, ainsi que représenté en figure 3c, le module pilote comporte un outil d'édition des médias comportant au moins une fenêtre page écran Média comprenant au moins une fenêtre d'affichage d'une liste des plates-formes d'exécution, une fenêtre d'affichage d'une liste de médias spécifiques susceptibles d'intervenir dans la composition d'une scène, chaque média étant défini par un nom et un attribut, l'attribut alloué à un média donné permettant de discriminer le caractère interne ou externe du média vis-à-vis de l'application considérée.

En référence à la figure 3c, on indique que l'outil d'édition de média permet ainsi l'ajout d'un média par le bouton Ajout ou la suppression de ce média lorsque le média n'est plus utilisé dans les objets ou dans les fonds constitutifs de l'application interactive considérée. Cet outil permet ainsi de caractériser le média, son nom et ses attributs et l'attribut chargement des médias peut être du type "ap" ou "sc" si le type du média est une image vidéonumérique de type Mpeg, le type "ap" indiquant que le média est inclus dans l'application et le type "sc" indiquant que le média est externe à l'application et sera capturé si besoin lors de la présentation d'une scène.

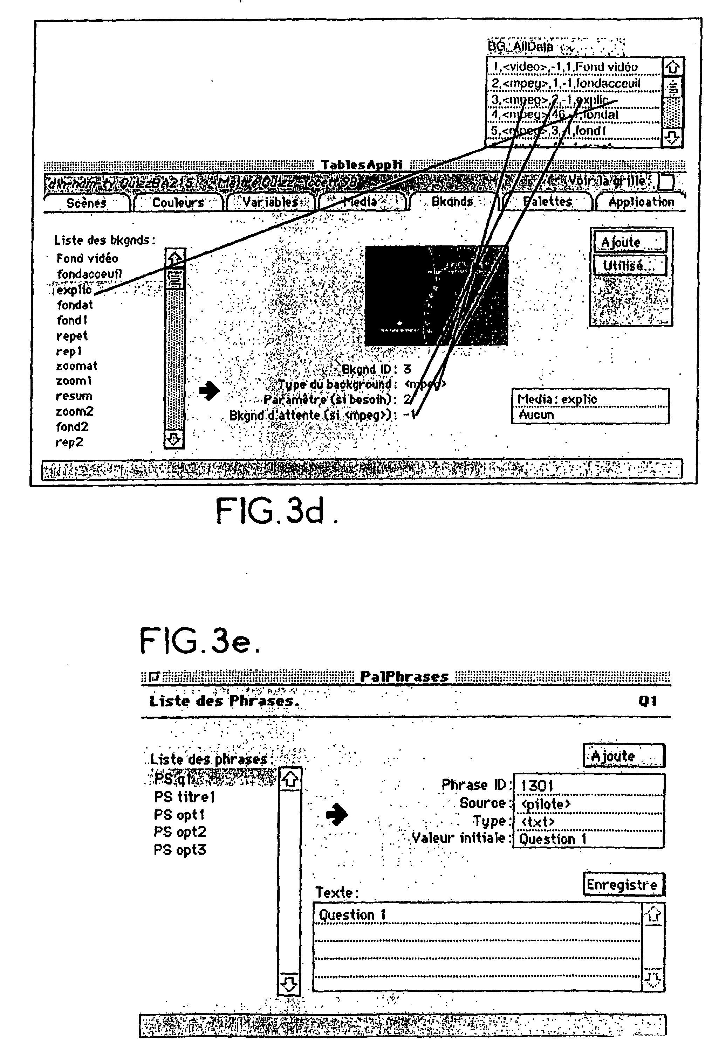

En référence à la figure 3d, on indique que le module pilote peut également comporter un outil d'édition des fonds, cet outil permettant d'ajouter et de supprimer si nécessaire des fonds et d'affecter les données selon la structure de données de fonds telle que décrite en liaison avec les tableaux 11 et 12 précédemment mentionnés dans la description.

Ainsi que représenté en figure 3e, le module pilote comporte de manière avantageuse un outil d'édition de phrases sous forme de fichier texte, chaque phrase comportant un numéro d'identification permettant d'affecter cette phrase, soit au niveau de l'application interactive en cours de développement, soit au niveau d'une ou plusieurs scènes constitutives de cette application. On comprend en particulier que l'outil logiciel précité permet de saisir essentiellement du texte, désigné par phrase, des données correspondantes de type phrase étant affectées au niveau application ou au niveau de chaque scène constitutive de celle-ci.

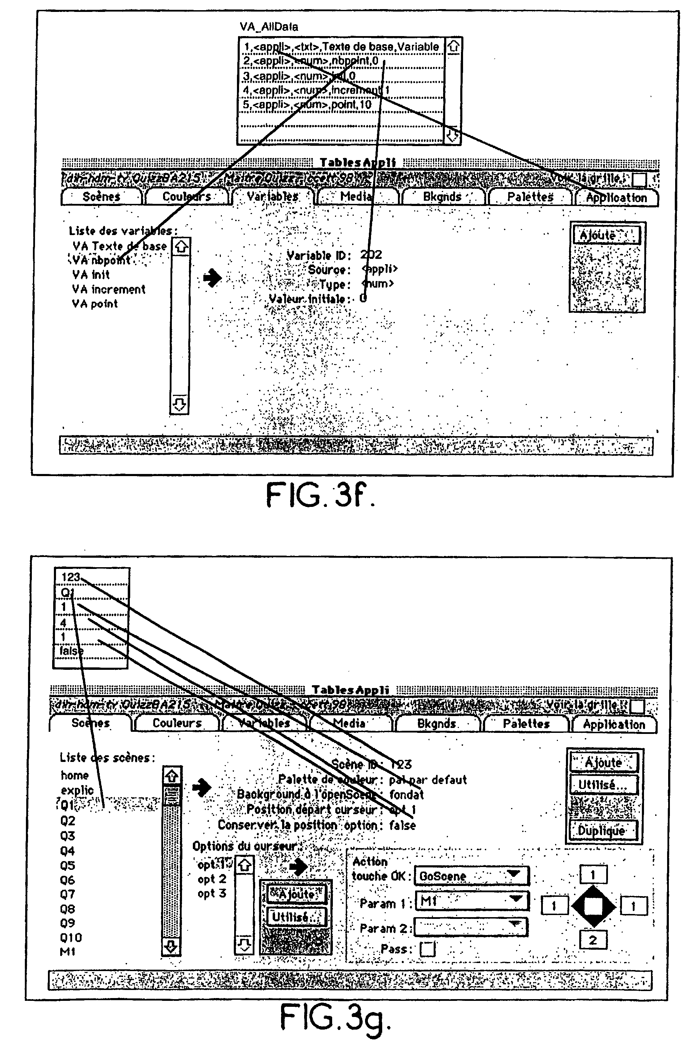

De même, en référence à la figure 3f, on indique qu'un outil logiciel d'édition de variables peut être prévu, cet outil permettant de créer ou de supprimer si besoin des variables de contenu texte ou numérique, ces variables étant structurées selon la structure de données VA_(AllData) introduite précédemment dans la description en liaison avec le tableau 14.

Selon un mode de réalisation préférentiel du système de développement d'applications interactives, objet de la présente invention, on indique que le module pilote peut également comporter un outil logiciel de création de scène comportant au moins une fenêtre d'affichage d'une liste de scènes types, ainsi que représenté en figure 3g, chaque scène type étant repérée par une désignation spécifique. En outre, une fenêtre de définition de paramètres de la scène choisie peut être prévue, paramètres tels que numéro d'identification de scène, désignés par Scène ID, palette de couleurs, choix du fonds à l'initialisation de la scène, désigné par Background à l'openScène, Position de départ du curseur, et une fenêtre de choix d'Options pour le curseur considéré.

L'outil logiciel de création de scènes permet de créer une nouvelle scène, respectivement de dupliquer ou de supprimer une scène existante. Lors de la duplication d'une scène, toutes les données relatives à la scène sont recopiées au niveau de la scène dupliquée.

En ce qui concerne les options telles que les options du curseur précédemment mentionnées en liaison avec la figure 3g, on indique que le module pilote comporte également un outil logiciel de définition d'options dans une scène dont les pages écran sont représentées aux figures $3h_1$ et $3h_2$.

D'une manière générale, on indique que l'outil précité permet, à partir d'une liste d'options définies pour la scène considérée, en particulier les options du curseur, d'attribuer une option déterminée parmi la liste d'options et de naviguer et choisir une option auxiliaire autour de l'option attribuée à partir d'un ensemble de boutons de commande du module de commande associé au moniteur d'affichage. On comprend en particulier, en référence à la figure 2 par exemple, que les boutons de commande concernés peuvent avantageusement être des boutons de déplacement vertical, vers le haut, vers le bas, vers la droite, vers la gauche appartenant au groupe des boutons de navigation NV, tel que représenté en figure 2 et au tableau 26 précédemment introduit dans la description.

On comprend en particulier que grâce à l'outil logiciel précité, il est ainsi possible d'attribuer une option de départ à la constitution d'une scène, puis ensuite de naviguer par l'intermédiaire des boutons préconfigurés, flèches, ou de choisir une autre option par le choix d'un bouton du clavier ou d'un événement couplé à l'action de désignation d'une option DesignOpt.

L'outil logiciel précité peut également inclure de manière avantageuse l'exécution directe de l'action, offerte parmi toutes les actions offertes, couplée à l'option désignée si l'événement Keyok est déclenché. Une analogie de fonctionnement avec le double cliquage d'un bouton de la souris d'un micro-ordinateur peut être mise en évidence.

Deux exemples illustratifs spécifiques seront donnés ci-après.

Exemple 1

Création d'une animation d'objets, virtuels. Chaque objet dispose d'un attribut d'affichage de type option et d'un numéro d'option de 1 à 10. La sélection séquentielle de chaque option permet donc de faire défiler les objets les uns derrière les autres et de restituer ainsi un kaléidoscope d'objets.

Exemple 2

Création d'un curseur à l'écran qui matérialise une désignation et une sélection par la boîte à boutons, par utilisation de quatre flèches.

En conséquence, l'option attribuée constitue en fait un paramètre d'affichage de l'objet virtuel ainsi constitué, ce qui permet de conférer aux applications interactives développées grâce au système, objet de la présente invention, une très grande souplesse et une très grande versatilité d'utilisation.

De même, afin de caractériser chaque application interactive développée grâce au système, objet de la présente invention, cette caractérisation visant aussi bien des caractères spécifiques au contenu de l'application, au numéro de version de l'application et ses évolutions ainsi qu'à des droits, notamment droits d'auteur relatif à cette application, le pilote peut comporter avantageusement un outil d'émission des attributs d'une application déterminée, ces attributs comportant au moins un champ commentaire descriptif de l'application, un champ de désignation de l'auteur de l'application, un champ de nom de l'application, un champ de numéro de version de l'application et un champ de palette de couleurs de l'application considérée, ainsi que représenté en figure 3i.

Selon un aspect particulièrement remarquable du système de développement d'applications interactives, objet de la présente invention, pour chacune des plates-formes d'exécution d'application, celui-ci comprend un ensemble de tables de données communes au couple plate-forme d'exécution/application et un outil de consultation des tables communes permettant de consulter les tables communes précitées, manipulées dans l'éditeur E, pour les plates-formes d'accès définies.

L'ensemble des données communes comporte au moins :

- une table des données d'applications relatives à la plate-forme considérée ;
- une table des données caractéristiques de chaque plate-forme ;
- une table des événements relatifs à la plate-forme d'accès considérée ;
- une table des actions d'applications relatives à cette même plate-forme ;
- une table des fontes disponibles pour la plate-forme d'accès considérée.

La table des données communes peut être définie pour chaque application, à l'éditeur E étant associé un fichier texte particulier qui contient un descriptif des données manipulées.

Un tel fichier texte, dénommé ADR_Data, peut être édité par un simple éditeur de texte et permet d'engendrer des données externes. La modification de ces données entraîne, par l'intermédiaire de l'éditeur E, une mise à jour de ces données dans l'application en cours ouverte. Lors de l'ouverture de l'application, une recopie de ces données est effectuée de l'éditeur dans l'application.

Un exemple de contenu du fichier ADR_Data est donné ci-après dans le tableau 27.

Dans ce mode de mise en oeuvre de la structure de données représentée au tableau 27, les trois premières lignes définissent des données manipulées à travers des API, pour *Application Protocol Interface.* Les deux premières données sont intrinsèques au pilote ADRTVnum, TheKeyNum permettant d'identifier une touche du clavier et TheCurOpt permettant d'identifier le numéro d'option courant. The CurTime à travers une API spécifique pour chaque plate-forme d'accès permet d'identifier l'heure courante. Des extensions peuvent bien sûr être prévues telles que des données définies dans le système DVB ou des données liées à un système de contrôle d'accès par l'intermédiaire d'une carte à microprocesseur ou d'un modem.

Ces données manipulées à travers le module pilote sont statiques car invariantes, mais restituées d'une façon dynamique sur une plate-forme d'accès de type terminal récepteur de télévision par exemple.

Un exemple de création d'une structure de données correspondante telle que représentée au tableau 6 précédemment dans la description pour les données désignées par la structure de données DO_AllData est représentée en figures $3j_1$ et $3j_2$ ci-après, la figure $3j_1$ permettant la mise en correspondance de la table des données et des listes de plates-formes à partir des valeurs d'identification de données Data_ID, origine de la mise à jour des données, type de la donnée et valeur actuelle, et de paramètres relatifs à la plate-forme utilisée, la plate-forme MACINTOSH dans le cas de la figure $3j_1$ et des paramètres relatifs à cette plate-forme, et la figure $3j_2$ représentant les fenêtres relatives aux pages écran, aux actions, aux événements et aux fontes, ainsi que mentionné précédemment dans la description.

Alors que l'ensemble des structures de données et des macro-instructions développé ainsi que décrit précédemment grâce à la mise en oeuvre du système, objet de la présente invention, constitue une application interactive native, c'est-à-dire une application interactive dont l'ensemble des couples événement/action mis en corrélation et des scènes successives constitutives de cette application, ont été définis de manière générique pour tout type de terminal d'accès à l'application interactive considérée, bien entendu, le système, objet de l'invention, comporte en outre un module de traduction de l'application interactive native précitée en une application interactive dédiée à un terminal d'accès de type déterminé.

On comprend en particulier que l'application native étant décrite ainsi que mentionné précédemment, il est alors nécessaire d'engendrer une nouvelle description de l'application permettant la représentation de cette dernière dans le format du langage du pilote de la plate-forme cible ou terminal d'accès.

Ainsi que mentionné précédemment dans la description, le module de traduction de l'application interactive native peut consister en différents sous-modules de programmes permettant la traduction de cette application native en une application interactive dédiée à un terminal de type *OPEN TV,* MAC-OS ou document HTML, ou tout autre système d'exploitation.

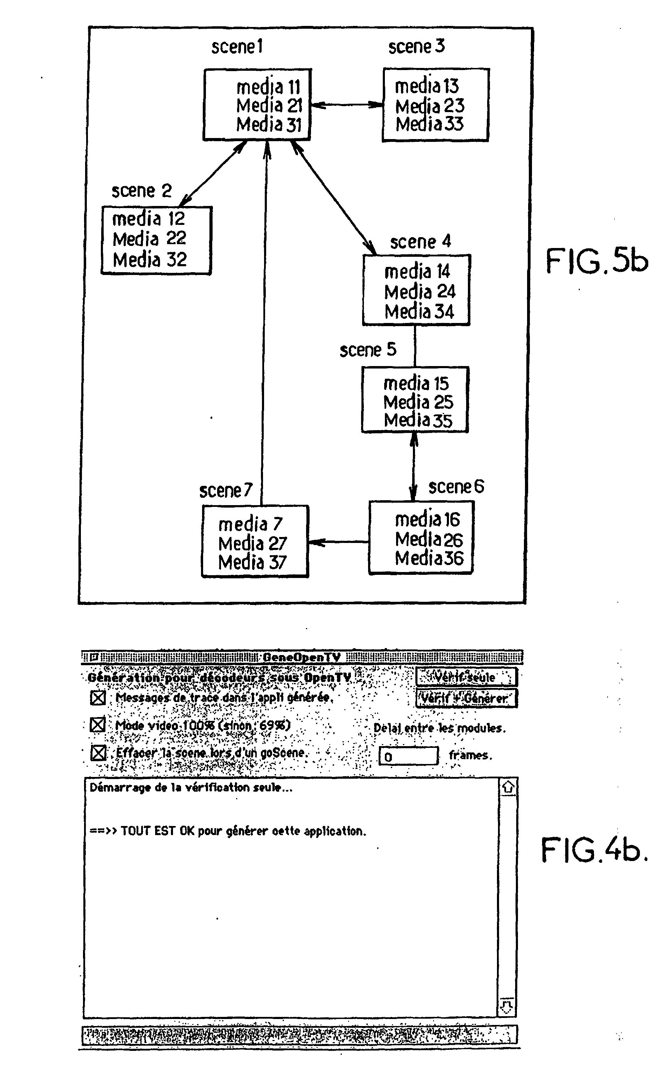

Une description plus détaillée de l'organisation générale de la création d'une application interactive native puis de la traduction de cette dernière en une application dédiée de type *OPEN TV* à partir des structures de données précédemment décrites sera maintenant donnée en liaison avec les figures 4a et 4b.

Sur la figure 4a, on a représenté l'organisation générale de la création de l'application à partir des fichiers d'origine et des fichiers courants auxiliaires représentés par des ovales à partir de modules d'exécution de programmes représentés par des rectangles.

Dans le cas où l'application comporte des graphiques et des images naturelles, les médias représentés par des fichiers A et B et leur transformation respective sont nécessaires pour chaque pilote considéré. Les transformations de formats à partir d'images naturelles sont des opérations effectuées par des convertisseurs de format externe à l'Atelier ADRTVNum.Un convertisseur de format 200A est prévu pour transformer l'image naturelle représentée par le fichier A en un fichier A' pour une représentation image à travers le pilote MacOS. Un convertisseur de format appelé codeur image Mpg2, appelé ici module de programme 203, est nécessaire pour transformer l'image naturelle représentée par le fichier A en fichier N pour une représentation image à travers le pilote Opentv.

Dans le cadre de la transformation d'images dites graphiques, un convertisseur de format 200B est nécessaire pour la transformation d'une image graphique B en un format représenté par le fichier D pour le pilote MacOS et un fichier C pour le pilote Opentv. Un module logiciel 202 permet, à partir du fichier C, d'engendrer un fichier F descriptif de l'objet constitué par l'image précitée, taille exacte du média dans le format Opentv après transformation finale, table des couleurs, et un fichier G par codage de l'image d'origine par un codage spécifique Opentv. Les fichiers F et G portent les noms pixName.txt et pixName.rc respectivement.

Le fichier H, appelé Datamake.txt, constitue le fichier modèle permettant de générer un fichier de diffusion appelé Q en Opentv.

Lorsque la complétude est constatée, c'est-à-dire lorsque la présence des différents fichiers est nécessaire au bon fonctionnement de la génération, a été vérifiée, un module de programme spécifique permet la création des fichiers descriptifs de l'application pour un système d'exploitation déterminé. Les fichiers descriptifs portent la référence I, J, K, L sur la figure 4a et les modules de programme précités, portent la référence 206 pour une application Opentv, le module 208 permet une génération pour une application document en HTML et le module 207 pour un format quelconque.

A partir des fichiers I, J, K, L précités et de fichiers auxiliaires tels que fontes utilisées, fichiers M, les fichiers images MPEG N établis à partir du module 203, du fichier pilote O et du fichier P de classe description générique pour toutes les applications, un module de programme 209 permet d'assurer une compilation en un fichier U constituant une application interractive dédiée prête à être distribuée. Un module de programme 210 permet l'exécution de l'application représentée par le fichier Q. Les fichiers images MPEG N peuvent se situer au même niveau que le fichier G, de manière que Checkoptv permette de vérifier leur présence.

Dans le cas d'une application dédiée au système *OPEN TV,* un outil de génération spécifique est prévu au niveau de l'éditeur E dont une page écran est représentée en figure 4b. Cet outil permet en particulier d'engendrer des simplifications de mise en oeuvre propres aux terminaux d'accès *OPEN TV* tels que :

- message trace : lorsque la case correspondance est cochée, ceci permet d'activer une fonction de trace dans le logiciel d'application avec affichage du descripteur, champ commentaire descriptif d'une application, champ auteur de l'application, taille mémoire restante, taille mémoire continue restante par exemple ;
- mode vidéo : suivant les versions de réalisation de la plate-forme d'accès *OPEN TV,* la surface d'incrustation est plus ou moins restreinte ;
- effacer la scène : permet d'éviter les effets visuels entre l'effacement d'une scène et la construction de la nouvelle scène ;
- délai : permet de gérer les temps inter-modules et influant sur la construction du fichier de construction du flux de données, le fichier J.

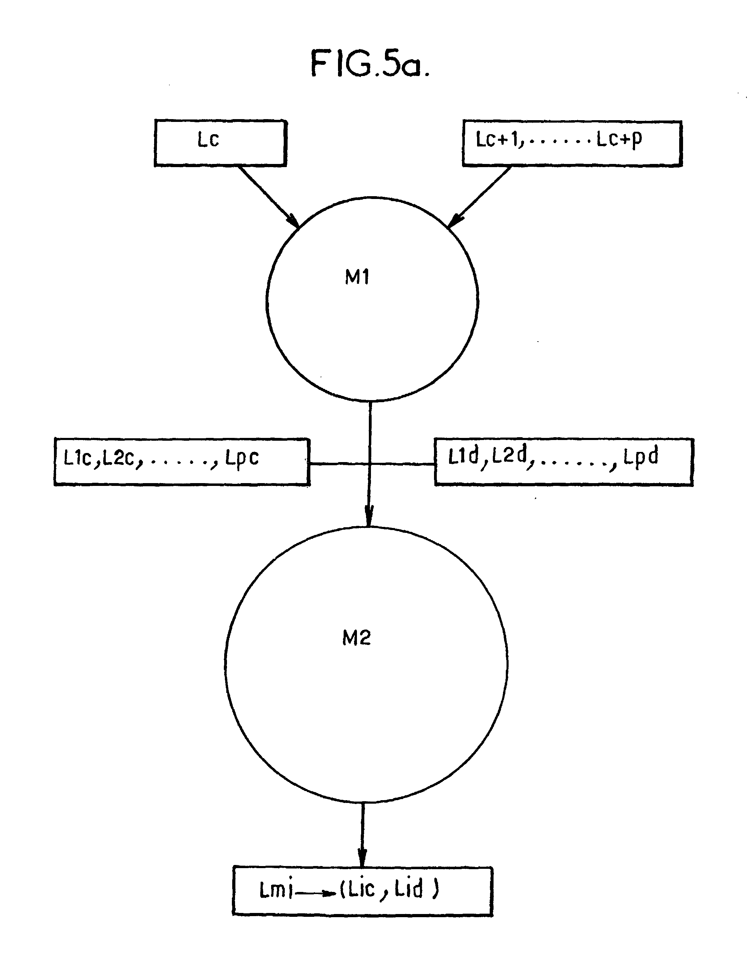

Une description plus détaillée d'un gestionnaire de développement d'applications interactives à diffusion cyclique, accessibles notamment sur un canal TV à partir d'un terminal d'accès muni d'un décodeur TV, sera maintenant donnée en liaison avec les figures 5a et 5b.

Lorsque la capacité mémoire des décodeurs, notamment des décodeurs TV, est limitée, il est nécessaire de mettre en oeuvre un processus de prédiction ayant pour objet d'agir sur l'acquisition des médias des données programme propres à la construction des futures scènes d'une application donnée.

On rappelle en premier lieu que les objets virtuels sont des conteneurs qui contiennent des contenus médias ou multimédias, c'est-à-dire en fait des objets distincts.

Ainsi que représenté sur la figure 5a, le système objet de la présente invention comporte au moins dans ce but un module logiciel $M_1$ gestionnaire d'une pluralité de scènes successives constitutives de cette application, selon un niveau de profondeur de chaque scène vis-à-vis de la scène courante. Le module logiciel gestionnaire $M_1$ permet d'analyser et de discriminer sur un nombre déterminé de scènes successives voisines de la scène courante des objets virtuels communs et les médias communs associés à ces objets de ces scènes successives, des objets virtuels distincts et des médias distincts associés à ces objets de ces scènes successives.

Selon un mode de réalisation non limitatif, on indique que les objets virtuels et les médias correspondants pour chaque scène considérée peuvent être constitués selon une liste informatique sur laquelle les opérations du module logiciel $M_1$ peuvent être effectuées. Ainsi, la liste des objets virtuels et des médias relative à la scène courante est notée $L_c$ et la liste des objets virtuels et des médias relative à chaque scène successive de rang 1 à p voisine de la scène courante est notée $L_{c+1},...,L_{c+p}$.

Par des opérations informatiques analogues à des opérations de troncature et d'union d'ensembles appliquées aux listes précitées, le module logiciel gestionnaire $M_1$ permet de délivrer des listes désignant les objets virtuels communs et les médias communs associés à ces objets de ces scènes successives, ces listes étant notées $L_{1c},L_{2c},...,L_{pc}$ pour les listes communes. A titre d'exemple non limitatif, les listes communes précitées peuvent être déterminées par l'opération de troncature entre la liste courante $L_c$ et la liste suivante commune $L_{c+1}$ et actualisation successive. Une pluralité de listes courantes $L_{c+1}$ à $L_{c+r}$ avec r>p peut être prise en considération afin d'optimiser les calculs. De même, le module logiciel gestionnaire $M_1$ permet de calculer les listes distinctes d'objets virtuels et des médias distincts, notées $L_{1d},L_{2d},...,L_{pd}$ par une opération de disjonction entre la liste courante $L_c$ et les listes successives $L_{c+1},L,...,L_{c+p}$. De la même manière que dans le cas des listes communes, des listes distinctes peuvent être réalisées pour la liste courante à partir d'une pluralité r de listes successives $L_{c+1}$ à $L_{c+r}$, r<p.

Ainsi que représenté en outre en figure 5a, le système comporte également un module logiciel d'actualisation $M_2$ des objets virtuels et médias communs et des objets virtuels et médias distincts pour au moins une scène successive constitutive de la pluralité de ces scènes successives par rapport à la scène courante. Ainsi que représenté sur la figure précitée, le module logiciel d'actualisation $M_2$ reçoit les listes communes et les listes distinctes précédemment mentionnées.

On comprend ainsi qu'à partir de ces dernières, le module logiciel d'actualisation $M_2$ permet de calculer chaque liste de mise à jour, notée $L_{mi}$, à partir de chaque liste commune successive $L_{ic}$ et de chaque liste différence successive $L_{id}$.

Les listes précitées vérifient la relation symbolique :

$$L_{mi} \leftrightarrow (L_{ic}, L_{id}).$$

Un exemple spécifique de mise en oeuvre du module logiciel représenté en figure 5a sera maintenant donné en liaison avec la figure 5b.

D'une manière générale, on indique que les données multimédias ou les médias considérés sont chargés dans des conteneurs propres à la diffusion. Ces conteneurs spécifiques sont désignés par modules conteneurs. En outre, le logiciel de l'application interactive considérée est également empaqueté dans un ou plusieurs modules conteneurs. Le module conteneur nécessaire à la gestion de la première scène de l'application multimédia considérée est appelé module principal. Ce module doit être capturé en premier par le terminal afin de permettre la représentation de la première scène de l'application interactive. Un module conteneur peut contenir plusieurs médias ou multimédias mais strictement de même type. La taille du module conteneur de chaque type est fixée par l'éditeur, c'est-à-dire par l'outil ou système de développement rapide d'applications interactives, objet de la présente invention.

Le degré de profondeur d'une scène de l'application désigne le niveau de cette scène par rapport à la scène courante.

Par convention, dans l'exemple donné en relation avec la figure 5b, on indique que le niveau zéro désigne la scène courante présente à l'écran, le niveau 1 la prochaine scène contiguë à la scène courante, les différents niveaux successifs 2 à p étant ainsi définis.

Une analyse fonctionnelle de l'application et la mise en oeuvre d'un prédicat relatif à la nécessité de mémoriser ou non chaque média et chaque objet virtuel permet alors d'optimiser la mémorisation et les capacités de mémorisation nécessaires à la conduite de la représentation des scènes.

Les paramètres nécessaires à l'analyse sont les suivants :

- taille mémoire allouée à une application interactive téléchargée dans un terminal ;
- structure de l'application interactive et en particulier arbre et contenu de chaque scène ;
- taille mémoire de chaque conteneur de diffusion par type de média ;
- nombre de niveaux d'analyse, c'est-à-dire r, pour chaque scène.

  Le processus, et en particulier le module logiciel gestionnaire $M_1$, analyse la structure arborescente de l'application et constitue pour chaque scène successive un arbre de diffusion contenant toutes les scènes de niveau 0 à p.

- A chaque scène de niveau 0 sont constituées les listes des différents chemins correspondant aux futures différentes scènes possibles de sortie, c'est-à-dire de niveau 1.
- A chaque scène de niveau 0, une analyse des conteneurs est effectuée et à chaque conteneur est affecté une variable de mémorisation de la forme :

  - ■ 0 : acquisition lorsque la scène est ouverte ;
  - ■ 1 : acquisition lorsque l'application interactive est téléchargée ;
  - ■ 2 : gestion par l'automate.

  L'affectation 0 ou 1 est proposée par le système de développement, objet de la présente invention, au concepteur de l'application, par l'intermédiaire de l'éditeur E et de l'écran interactif.

- A chaque scène de niveau 2 à p, une analyse des conteneurs de diffusion est effectuée et, à chacun de ces derniers, est affectée une variable de mémorisation de la forme :

  - ■ 1 : le conteneur de diffusion doit être acquis lorsque la scène en cours est représentée ;
  - ■ 0 : le conteneur ne doit pas être acquis lorsque la scène en cours est représentée.

  L'affectation des valeurs 0 ou 1 précédente est effectuée de manière globale, pour chaque scène de niveau compris entre 2 et p, ou pour un nombre de scènes r, ainsi que mentionné précédemment dans la description.

Ainsi, une première passe d'analyse et de stratégie d'acquisition des conteneurs de diffusion est effectuée. Lors de cette passe, le module logiciel gestionnaire $M_1$ constitue ainsi la liste des conteneurs nécessaires à chaque scène et une seconde passe permet de compléter cette liste et de déterminer les modules de diffusion suivant la stratégie d'acquisition afin d'optimiser l'occupation mémoire d'un module. La taille mémoire occupée à chaque scène par l'ensemble des modules est ainsi connue.

En fonction de la taille mémoire disponible dans le terminal d'accès, le concepteur de l'application peut ainsi affiner sa stratégie et effectuer un compromis entre la vitesse d'affichage d'une scène avec tous ses conteneurs de diffusion et la taille mémoire allouée aux conteneurs multimédias.

La taille mémoire de l'application interactive nécessaire au téléchargement est ainsi optimisée : plus cette taille est faible et moins le temps d'attente d'apparition de la première scène de l'apparition est long. L'analyse précédente peut également être adaptée pour connaître la ressource nécessaire en débit pour une application interactive considérée.

Selon un aspect remarquable du système objet de la présente invention, à chaque changement de scène, le pilote du terminal d'accès vérifie, par l'intermédiaire du module logiciel d'actualisation $M_2$, si les conteneurs de diffusion à acquérir ne sont pas déjà en mémoire. La place mémoire des mots nuls non nécessaires est ainsi libérée.

La figure 5b représente les relations successives entre les scènes d'une application interactive donnée à titre d'exemple non limitatif et composée de sept scènes.

Chaque scène est réputée contenir trois médias de type différent, les médias, pour chaque scène, étant définis par un indice de média et un indice de scène, la notation média jk désignant ainsi le média de rang j utilisé dans la scène de rang k.

Chaque scène sur la figure 5b est réputée comporter trois médias de type différent. A chaque scène de niveau 2 à p, l'acquisition n'est pas demandée pour chaque média.

Le tableau résultant de l'analyse de l'application interactive correspondant à l'exemple donné en figure 5b est le tableau n° 28 en annexes.

A titre de simplification, on a volontairement réduit le tableau 28 à quatre niveaux. Enfin, dans le tableau 28, l'indice de scène k a été supprimé mais la valeur de la variable binaire, acquisition ou non du conteneur, a été mentionnée.

A titre d'exemple non limitatif simplifié, chaque média étant de même type et étant réputé nécessiter un espace mémoire de 30 k octets, la taille mémoire requise pour gérer, dans l'exemple de la figure 5b, un arbre de niveau 1 est 12 x 30 = 360 k octets.

**ANNEXES**

## TABLEAU 1

```
(100,101)→102 ;  (105,102,104)→106 ;  103→104 ;
(107)→108 ;  (109,110,106,108,111,116,117,113)→ 114 ;
(116,111)→115 ;  (111)→116 ;  (116)→117 ;
(117,116,115,111,108,104,102,112,118)→113 ;
(114)→119.
```

## TABLEAU 2

| PL | Table des plates-formes cibles | | | | |
|---|---|---|---|---|---|
| PL_MaxTextSize | | 255 | Nbr max de char pour les textes (var/Don et phrases) | fld PL_MaxText | |
| Pour chaque PL | | | | fld PL_AllData | 1 ligne |
| | PL_Ident | | Identifiant de la plate-forme | | item 1 |
| | PL_Name | | Nom de la plate-forme | | item 2 |
| | PL_Nbr_Coul | num | Nombre de couleurs max de la palette (attention : OpenTV : 15) | | item 3 |
| | PL_RamMedia Max | koctet | Mémoire maxi (pour chargement média) | | item 4 |
| | PL-FileMedia Size | koctets | Espace dispo pour média (disque/Module) | | item 5 |
| | PL_FileMedia Max | num | Nbr max de média (par disque/Module) | | item 6 |
| | PL_EndOfLine | | Caractère de fin de ligne pour les textes | | item 7 |
| | PL_ScreenRect OK | xl,yl,x2,y2 | Zone de sécurité de la plate-forme (ex. SAGEM/mode2) | | items 8 à 11 |
| Cette table peut être étendue à d'autres paramètres tels : | | | | | |
| | Opacité de la couleur de la transparence | 0 à 255 | Efficacité de la transparence | | |

EP 1 194 843 B1

**TABLEAU 3**

| AC | Table des actions | | | | |
|---|---|---|---|---|---|
| Pour chaque action | | | | fldAC_AllData | 1 ligne |
| | AC_Ident | | Identifiant de l'action | | item 1 |
| | AC_Type | <AC_Type_list> | Type de l'action (selon ce sur quoi l'action porte) | | item 2 |
| | AC_Name | | Nom de l'action | | item 3 |
| | AC_NbPar | num | Nombre de paramètres | | item 4 |
| | Pour chaque PL | | ⇒ pour les types dépendants des PL | card PL_j | j |
| | | AC_Dispo | Bool | *Vraie si action disponible pour cette plate-forme* | item 2 |
| | | AC_Data | Si dispo | *Si dispo : description de l'action pour la plate-forme* | item 3 |
| | | | | *Ex : nom de la fonction ou de la procédure à appeler* | |

EP 1 194 843 B1

**TABLEAU 4**

| FO | Table des fontes | | | --vl de l'éditeur : Hel 18, 24 et 36 seulement | | |
|---|---|---|---|---|---|---|
| Pour chaque fonte | | | | | fld FO-AllData | 1 ligne |
| | FO_Ident | | | Identifiant de la fonte | | item 1 |
| | FO_Name | | | Nom de la fonte | | item 2 |
| | Pour chaque PL | | | | card PL-j | j |
| | | FO_Ref | | Référence de la fonte pour la plate-forme cible. Ex. | | items 2 et + |
| | | | | • MacOS : fo_ident,nom de fonte + taille | | |
| | | | | • Internet : nom de fonte + taille | | |
| | | | | • OpenTV : fo_ident,otv_ident | | |

EP 1 194 843 B1

**TABLEAU 5**

| EV | Table des événements | | (5 mini : Up,Down,Right,Left,OK⇒ type <Remote>) | | |
|---|---|---|---|---|---|
| Pour chaque événement | | | | fldEV_AllData | 1 ligne |
| | EV_Ident | | Identifiant de l'événement | | item 1 |
| | EV_Type | <EV_Type_list> | Type de l'événement (selon ce qui génère l'événement) | | item 2 |
| | EV_Name | | Nom de l'événement | | item 3 |
| | Pour chaque paramètre | | (optionnel) | | k |
| | | EV_Param | Paramètres de l'événement (selon le type) | | items 3+k |
| | Pour chaque PL | | | card PL_j | j |
| | | EV_Dispo | bool | *Vraie si événement disponible pour cette plate-forme* | item 2 |
| | | EV_Data | si dispo | *Si dispo : description de l'événement pour la plate-forme* | items 3 et + |
| | | | | *Ex. nom du message reçu dans le code* | |

EP 1 194 843 B1

**TABLEAU 6**

| DO | Table des données | | | fld DO_AllData | 1 ligne |
|---|---|---|---|---|---|
| Pour chaque donnée | | | | fld DO_AllData | 1 ligne |
| | DO_Ident | 1 à 3 | Identifiant de la donnée – Data_ID=100+DO_Ident | | item 1 |
| | DO_Origine | <EV_Type_List> | Origine de la donnée : les READ ONLY seulement (pas les <appli>) | | item 2 |
| | DO_Type | <VA_Type_List> | Type de la donnée⇒ <num>ou <txt> | | item 3 |
| | DO_Name | txt | Nom de la donnée | | item 4 |
| | PH_Line | Lignes de texte (sans virgule) ou nombre entier | | | item 5 |
| | Pour chaque PL | | | card PL_j | j |
| | | DO_Dispo | bool | Vraie si donnée disponible pour cette plate-forme | item 2 |
| | | DO_Data | si dispo | Si dispo : description de la donnée pour la plate-forme | item 3 |
| | | | | Ex. nom de la fonction API qui retourne la donnée .. | |

TABLEAU 7

| Evénement | Identification | Type | Liste Paramètres | Commentaires : Evénements provoqués par : |
|---|---|---|---|---|
| Keynav | 1 | Remote | Up, down, right, left | Appui sur une des touches de navigation du clavier ou de la télécommande |
| KeyNum | 2 | Remote | 0,1,2,3,4,5, 6,7,8,9,x | Appui sur une des touches du pavé numérique du clavier ou de la télécommande |
| KeyOK | 3 | Remote | | Appui sur la touche de validation |
| KeyHome | 4 | Remote | | Appui sur la touche Menu |
| KeyBack | 5 | Remote | | Appui sur la touche Retour |
| AppliStart | 6 | Appli | | L'application a été lancée et provoque ce message |
| SceneOpen | 7 | Appli | | A chaque ouverture d'une événement est généré |
| TimerExpired | 8 | Appli | 1 à 20 | Lorsqu'un timer a fini son temps, cet événement est généré |
| SceneClosed | 9 | Appli | | A la fermeture d'une scène, cet événement est provoqué |
| event1 | 10 | ?? | | Pré-câblage d'un événement à définir |
| event2 | 11 | ?? | | Pré-câblage d'un événement à définir |
| event3 | 12 | ?? | | Pré-câblage d'un événement à définir |
| event4 | 13 | ?? | | Pré-câblage d'un événement à définir |
| event5 | 14 | ?? | | Pré-câblage d'un événement à définir |
| MpegAff | 15 | Appli | | Lorsqu'une image dans le flux diffusé est capturée et mémorisée, ce message est généré |
| InsertCard | 16 | Appli | | Carte à puce introduite dans le lecteur |
| RemoveCard | 17 | Appli | 0 | Carte arrachée |
| Receptmodem | 18 | Ext | 0 | Demande de connexion |

TABLEAU 8

| Action | Identification | Type de l'action | Nombre de Paramètres | Commentaires : |
|---|---|---|---|---|
| Setbg | 1 | Med (media) | 1 | Affiche un background |
| PlayS | 2 | Med | 1 | Joue un son synthétique |
| PlayA | 3 | Med | 1 | Joue un son diffusé |
| PutInto | 4 | Var (variable) | 2 | Affecte une donnée à une variable |
| AddTo | 5 | Var | 2 | Additionne 2 nombres ou concatène 2 chaînes de caractères |
| GoScene | 6 | Nav (navigation) | 1 | Change de scène |
| GoBack | 7 | Nav | 0 | Retourne à la scène précédente |
| DesigneOpt | 8 | Nav | 1 | Change d'option |
| LaunchApp | 9 | Nav | 0 | Lance l'application |

TABLEAU 8   (suite)

| Action | Identification | Type de l'action | Nombre de Paramètres | Commentaires : |
|---|---|---|---|---|
| QuitApp | 10 | Nav | 0 | Quitte l'application |
| ShowObj | 11 | Nav | 1 | Affiche l'objet |
| HideObj | 12 | Obj | 1 | Cache l'objet |
| SetTimer | 13 | Dec (décodeur) | 2 | Arme un timer à un certaine valeur en millisecondes |
| Selectserv | 14 | Dec | 1 | Sélection du service TV (provoque un zapping) |
| StopTimer | 15 | Dec | 2 | Arrête le ou tous les timers |
| Mute | 16 | Dec | 0 | Coupe le son |
| Unmute | 17 | Dec | 0 | Rétablit le son |
| Gl_actn | 18 | ?? | 2 | Action pré-câblée mais qui est définie par l'utilisateur |
| ReadUA | 19 | Dec | 1 | Lire le paramètre Ua d'une carte à puce |
| Phone | 20 | Dec | 1 | Numéroter et établir une communication par modem |
| Nothing | 21 | Dec | 0 | Ne fait rien - valeur de défaut |
| Multo | | | | Multiplication entre 2 entiers numériques |
| Divto | | | | Division entre 2 entiers numériques |

**TABLEAU 9**

| AP | Attributs application | | | | | AP | ReadAttAP |
|---|---|---|---|---|---|---|---|
| | AP_Desc | | Description de l'application | fld AP_Desc | all | | GL_AP-Desc |
| | AP_Author | | Auteur, mention de © | fld AP_Author | all | | GL-AP-Author |
| | AP_Name | | Nom de l'application | fld AP_OneData | line 1 | | GL-AP-OneData |
| | AP_Version | | Version | | line 2 | | |
| | AP_Palette | <PA_Ident> | Palette de couleurs par défaut (si pas défini en scène) | | line 3 | | |
| | AP-StartSCRead | <Data_ID> | Donnée contenant le SC_Ident de la scène de départ (sinon : HOME) | | line 4 | | Si rien :-1 |
| | AP_CoulTrans | <CO-Ident> | Couleur de transparence de l'appli | | line 5 | | |
| | Pour chaque PL | | Indiquer quelles plates-formes on va générer | | J | | |
| | | AP-GenePL | Bool | Vraie si l'application devra être générée pour cette PL | line 6 | item j | | |
| | | | | | | | |

EP 1 194 843 B1

## TABLEAU 10

| PA | Liste des palettes utilisées par l'application | | | | PA | ReadListPal |
|---|---|---|---|---|---|---|
| Pour chaque palette gérée | | | fldPA_AllData | 1 ligne | | GL_PA_AllData |
| | PA_Ident | | Identifiant de la palette | item 1 | | |
| | PA_Name | | Nom de la palette (pour faciliter l'édition) | item 2 | | |
| | Pour chaque couleur possible | | 15 couleurs (pas de coul transp vidéo) pour OpenTV | k | | |
| | | Pal-Ref | <CO_Ident> | Identifiant de la couleur associée à position dans palette | item k + 2 | |
| | | | | | | |

## TABLEAU 11

| BG | Liste des backgrounds utilisés par l'application | | | | BG | ReadListBg |
|---|---|---|---|---|---|---|
| Pour chaque background géré | | | Fld BG_AllData | 1 ligne | | GL_BG_Alldata |
| | BG_Ident | | Identifiant du background | item 1 | | |
| | BG_Type | <Bgn_Type_List> | Type de background | item 2 | | |
| | BG_Par | | Valeur du background (selon le type) | item 3 | | |
| | BG_Wait | <BG_Ident>, aucun | Bg de type <col>, obligatoire si Bgn_Type=<mpeg>SC | item 4 | | |
| | BG_Name | Txt | Nom du background (pour faciliter l'édition) | | | |

EP 1 194 843 B1

## TABLEAU 12

| Bgn_Type_list | Type d'un background | | | | | | |
|---|---|---|---|---|---|---|---|
| | \<col\> | Couleur unie | | | | | |
| | \<vidéo\> | Transparence au signal vidéo | | | | | |
| | \<mpeg\> | Image MPEG en arrière-plan | | | | | |
| | *\<pict\>* | *Image bitmap (recouvre en "tile")* | | | | | |

EP 1 194 843 B1

**TABLEAU 13**

| ME | Liste des médias de l'application | | | | | | |
|---|---|---|---|---|---|---|---|
| Pour chaque média géré | | | | fld ME_AllData | 1 ligne | ME | **ReadListMedia** |
| | ME-Ident | | Identifiant du média | | item 1 | | GL_ME_AllData |
| | ME_Type | <ME_Type_List> | Type du média | | item 2 | | GL_ME_AllName |
| | ME_Load | <"AP" ou "SC"> | Mis à jour par la génération ? | | item 3 | | |
| | ME_GetorExit | Bool | Si vraie et pas de média : quitte ⇒lorsque ME_Load="AP" (= false si SC) | | item 4 | | **GetOneMedia (ME_Ident)** |
| | ME_Usage | <int> ou <ext> | Si externe : éditable en mode "exploitation" | | item 5 | | *GL_ME_OneData* |
| | Pour chaque PL | | | | J | | *GL_ME_OneName* |
| | | ME_RefIdent | Référence du média pour une plate-forme | | item 5 + j | | |
| | | *Structure interne : 1 ligne par ME_RefIdent* | | fld_MeAllRef | 1 ligne | | **ReadListMeREF** |
| | | ME_RefIdent | Identifiant de la référence | | item 1 | | GL_ME_AllRef |
| | | ME_RefPL | Rappel:plate-forme de cette référence (PL-Ident) | | item 2 | | |
| | | ME-Format | Format du média référencé (pct,gif,mpg,bmp..) | | item 3 | | **GetMeref(ME_RefIdent)** |
| | | ME_FileSize | Taille physique du média (pict/Module..) | | item 4 | | *GL_ME_OneRef* |
| | | ME_RamSize | Taille mémoire (pour pré-chargement) | | item 5 | | |
| | | ME-Ref | Référence du média pour la plate-forme | | item 6 | | |
| | | | MacOS : chemin complet sur le disque (pathname) | | | | |
| | | | Internet : URL | | | | |
| | | | OpenTV : nom fichier contenant le média (dans rep DataSunToMac relatif appli et sans suffixe) | | | | |
| | ME_Name | | Nom du média | fld ME_AllName | 1 ligne | | |

**TABLEAU 14**

| VA | Liste des variables de l'application | | | | | VA | ReadListVar |
|---|---|---|---|---|---|---|---|
| Pour chaque variable | | | Au moins une variable de type texte | Fld VA_AllData | 1 ligne | | GL_VA_AllData |
| | VA_Ident | 1 à 99 | Identifiant de la variable – Data_ID = 200 + VA_Ident | | item 1 | | |
| | VA_Origine | <appli> | Origine de la donnée :READ/WRITE seulement ⇒ <appli> | | item 2 | | |
| | VA_Type | <VA_Type_List> | Type de la variable ⇒ <num> ou <tex> | | item 3 | | |
| | VA_Name | txt | Nom de la variable | | item 4 | | |
| | VA_Line | | Lignes de texte (sans virgule) ou nombre entier | | item 5 | | |

| VA-Type_List | Types d'une variable d'application | | | | | | |
|---|---|---|---|---|---|---|---|
| | <txt> | Peut contenir toute chaîne de caractères | | | | | |
| | <num> | Nombre entier | | | | | |
| | | | | | | | |

EP 1 194 843 B1

## TABLEAU 15

| OC | Liste des objets d'interface communs à toutes les scènes | | | | | |
|---|---|---|---|---|---|---|
| Pour chaque objet commun | | | | fldOC_Alldata | 1 ligne | OC | ReadListObj(0) |
| | OC_Desc | | Description de l'objet commun | | | |
| | | Descr_Objet | Structure unitaire de description d'un objet | (voir plus loin) | items | | GL_OC_AllData |

## TABLEAU 16

| AA | Lignes Event/Action attachées à l'application | | | | | |
|---|---|---|---|---|---|---|
| Pour chaque action "appli" | | | | fldAA_Alldata | 1 ligne | AA | ReadListEva(0) |
| | AA_Num | | Numéro d'ordre de l'action | | *num ligne* | |
| | AA_Desc | | Description de l'action "appli" | | | | GL_AA_Alldata |
| | | Descr_Action | Structure unitaire de description d'une action | (voir plus loin) | items | | GL_AA_Allref |

**TABLEAU 17**

| SC | Attributs propres à une scène | | | fld SC_OneData | | SC | ReadAttSc |
|----|-------------------------------|---|---|----------------|---|----|-----------|
| | SC_Ident | | Identifiant de la scène (toujours au moins une scène : HOME) | cd id | line 1 | | GL_SC_OneData |
| | SC_Name | | Nom de la scène | cd name | line 2 | | |
| | SC_Palette | <PA_Ident> | Palette de couleurs (si vide : prend celle de l'appli) | | line 3 | | |
| | SC_BgFirst | <BG_Ident> | Identifiant du background pour l'open scène | | line 4 | | |
| | OP-Dep | OP-Num | Position de départ du curseur (-1 = pas de curseur) | | line 5 | | |
| | OP_Keep | bool | Vraie : repart du dernier opt de la scène | | line 6 | | |

**TABLEAU 18**

| OS | Liste des objets d'interface de la scène | | | | | 0S | ReadListObj (sc_Ident) |
|----|------------------------------------------|---|---|---|---|----|------------------------|
| Pour chaque objet | | | | fld OC_AllData | 1 ligne | | |
| | OS_Desc | | Description de l'objet | | | | |
| | | Descr_Objet | | Structure unitaire de description d'un objet | (voir plus loin) | items | GL_OS_AllData |
| | | | | | | | |

EP 1 194 843 B1

## TABLEAU 19

| AS | Liste des Events/actions attachés à la scène | | | fld AA_AllData | 1 ligne | AS | ReadListObj (sc_Ident) |
|---|---|---|---|---|---|---|---|
| Pour chaque action "scène" | | | | | | | |
| | AS_Num | | Numéro d'ordre de l'action "scène" | | *num line* | | GL_AS_AllData |
| | AS_Desc | | Description de l'action "scène" | (voir plus loin) | items | | GL_AS_AllRef |
| | | Descr_Action | Structure unitaire de description d'une action | | | | |

## TABLEAU 20

| PS | Liste des phrases attachées à la scène | | | | | | |
|---|---|---|---|---|---|---|---|
| Pour chaque phrase gérée | | | | fld PH_AllData | 1 ligne | PS | ReadListPh |
| | PH_Ident | | Identifiant de la phrase –Data_ID = 1300 + PH_Ident | | item 1 | | GL_PS_AllData |
| | PH_Origine | \<pilote> | Origine de la donnée:\<pilote>(READ ONLY seulement) | | item 2 | | GL_PS_AllText |
| | PH_Type | \<txt> | Type de la phrase ⇒ tjrs \<txt> | | item 3 | | |
| | PH_Name | txt | Nom de la phrase | | item 4 | | |
| | Pour chaque ligne de texte | | (caractère réservé pour "saut de ligne" (§)) | fld PH_AllText | 1 ligne | | |
| | | PH_Line | Lignes de texte | | | | |

EP 1 194 843 B1

## TABLEAU 21

| Structures unitaires | | | | | | |
|---|---|---|---|---|---|---|
| | | | | | | |
| **Descr_Objet** | **Description d'un objet (scène ou appli)** | | OC_AllData | | | |
| Obj_Ident | | Identifiant de l'objet | item 1 | | | |
| Obj_Level | | Niveau (pour affichage : 1 derrière, last devant) | item 2 | | | |
| Obj_Disp_Type | <Obj_Disp_List) | Type d'affichage de l'objet (Tjrs <sta> si niveau Appli | item 3 | | | |
| Obj_Disp_Val | | Attribut selon le type de Display | item 4 | | **GetOneObj(SC_ID,Obj_Ident)** | |
| Obj_Type | <Obj_Type_List> | Type de l'objet (voir tableau) | item 5 | | (0 ⇒ "AP") | |
| Obj_Name | | Nom de l'objet (sans virgules) | item 6 | | *GL_Obj_OneData* | |
| Obj_Data | | Attributs de l'objet (selon son type : 8 max) | items 7 à 14 | | | |

## TABLEAU 22

| **Obj_Disp_list** | **Valeurs possibles pour l'attribut DISP d'un objet** | | **Attributs** | |
|---|---|---|---|---|
| | <sta> | Affichage direct à l'OpenScene, sans conditions | - | |
| | <dyn> | Affichage via les actions de type <obj> (bool : OpenScene) | Bool | |
| | <opt> | Affichage lorsque la position xxx du curseur est désignée | OP_Num | |

EP 1 194 843 B1

## TABLEAU 23

| Obj_Type_list | Type d'un objet | | | | | | | |
|---|---|---|---|---|---|---|---|---|
| | <pict> | Image bitmap | | | | | | |
| | <gra> | Graphique généré sans média externe | | | | | | |
| | <text> | texte | | | | | | |

## TABLEAU 24

| Valeur de Obj_Data en fonction de Obj_Type | | | | | | | | |
|---|---|---|---|---|---|---|---|---|
| | ref | posX | posY | LargeMax | HautMax | Coul | Font | Transp |
| <pict> | ME_Ident | num pix | num pix | - | - | - | - | Bool |
| <gra> | - | num pix | num pix | num pix | num pix | Pal_Num | - | - |
| <text> | Data_ID | num pix | num pix | num pix | num pix | Pal_Num | FO_Ident | - |

EP 1 194 843 B1

**TABLEAU 25**

| Descr_EvAction | | | Description d'une ligne Event/Action (scène ou appli) | AA_AllData | | | |
|---|---|---|---|---|---|---|---|
| | Act_Event | <EV_Ident> | Identifiant de l'événement déclenchant | item 1 | | | |
| | Act_EvPar | Ev param | Paramètre de l'événement si besoin (ex. KeyNav ⇒ Up) | item 2 | | | |
| | Act_Pass | | Vraie si événement continue (valeur par défaut ?) | item 3 | | | |
| | Act_Ident | <AC_Ident> | Identifiant de l'action à déclencher (d'un type) | item 4 | | | |
| | Act_Par1 | | Param 1 de description de l'action (selon le type) | item 5 | | GetOneEva(SC_ID,i) | |
| | Act_Par2 | | Param 2 de description de l'action (selon le type) | item 6 | | (0 ⇒ "AP") | |
| | *Pour chaque condition (ET)* | | | k | | *GL_Eva_OneData* | |
| | | *Act_CondRef* | *Référence à une condition* | *item k + 6* | | | |
| | | *Structure interne : une ligne par CondRef* | | *AA_AllRef* | | *GetOneCond(k)* | |
| | | *Act_CondRef* | *Identifiant de la condition* | *item 1* | | *GL_Eva_OneRef* | |
| | | *Act_DataID* <*Data_ID*> | *DO_Ident ou VA_Ident ou PH_Ident selon 1er chiffre* | *item 2* | | *(via GL_Eva_OneData)* | |
| | | *Act_Value* | *Valeur qui doit avoir la VarData pour exécuter l'action* | *item 3* | | | |
| | | | | | | | |
| Règle de gestion : | | | Act_Pass=false si Action = "GoScene", libre sinon | | | | |

EP 1 194 843 B1

**TABLEAU 26**

| Nom touches Correspondant | Evénement |
|---|---|
| TV | KeyTV |
| Quitter | KeyQuit |
| Veille | KeyVeille |
| Prefs | KeyPrefs |
| Liste | KeyListe |
| Date | KeyDate |
| P+ | KeyP+ |
| P- | KeyP- |
| Volume+ | KeyVol+ |
| Volume – | KeyVol- |
| Mute | KeyMute/unMute |
| Guide | KeyGuide |
| Info | KeyInfo |
| Ret | KeyBack |
| Haut | KeyUp |
| Bas | KeyDown |
| Droit | KeyRight |
| Gauche | KeyLeft |
| OK | KeyOK |
| Menu | KeyMenu |
| Message | Key@ |
| Radio | KeyRadio |
| 0 à 9 | KeyNumb de 0 à 9 |
| A | KeyA |
| B | |
| C | |
| D | |
| -- | |
| Z | KeyZ |

**TABLEAU 27**

| | |
|---|---|
| 1,<décodeur>,<num>,TheKeyNum0 exemple | --Ne pas toucher cette ligne données prédéfinies et |
| 2,<appli>,<num>,TheCurOpt,0 exemple | --Ne pas toucher cette ligne données prédéfinies et |
| 3,<pilote>,<txt>,TheCurTime,00h00 exemple | --Ne pas toucher cette ligne données prédéfinies et |
| 4,<ext>,<Num>,TheData0,0 | |
| 5,<ext>,<Num>,TheData1,1 | |
| 6,<ext>,<Num>,TheData2,2 | |
| 7,<ext>,<Num>,TheData4,4 | |
| 8,<ext>,<Num>,TheData5,5 | |
| 9,<ext>,<Num>,TheData6,6 | |
| 10,<ext>,<Num>,TheData7,7 | |
| 11,<ext>,<Num>,TheData8,8 | |
| 12,<ext>,<Num>,TheData9,9 | |

EP 1 194 843 B1

TABLEAU 28

| Scènes niveau 0 | Niveau 1 | Niveau 2 | Niveau 3 | Niveau 4 | Nombre de modules à acquérir | Total mémoire nécessaire |
|---|---|---|---|---|---|---|
| **Scène 1**<br>Média1:1<br>Média2:1<br>Média3:1 | Scène 2<br>Média1:1<br>Média2:1<br>Média3:1 | Scène 5<br>Média1:0<br>Média2:0<br>Média3:0 | Scène 6<br>Média1:0<br>Média2:0<br>Média3:0 | Scène 7<br>Média1:0<br>Média2:0<br>Média3:0 | 12 | 12x30 |
| | Scène 3<br>Média1:1<br>Média2:1<br>Média3:1 | | | | | |
| | Scène4<br>Média1:1<br>Média2:1<br>Média3:1 | | | | | |
| **Scène 2**<br>Média1:2<br>Média2:2<br>Média3:2 | Scène 1<br>Média1:1<br>Média2:1<br>Média3:1 | Scène 3<br>Média1:0<br>Média2:0<br>Média3:0 | Scène 5<br>Média1:0<br>Média2:0<br>Média3:0 | Scène 6<br>Média1:0<br>Média2:0<br>Média3:0 | 0 | 6x30 |
| | | Scène 4<br>Média1:0<br>Média2:0<br>Média3:0 | | | | |
| **Scène 3**<br>Média1:2<br>Média2:2<br>Média3:2 | Scène 1<br>Média1:1<br>Média2:1<br>Média3:1 | Scène 2<br>Média1:0<br>Média2:0<br>Média3:0<br>Scène 4<br>Média1:0<br>Média2:0<br>Média3:0 | Scène 5<br>Média1:0<br>Média2:0<br>Média3:0 | Scène 5<br>Média1:0<br>Média2:0<br>Média3:0<br>Scène 7<br>Média1:0<br>Média2:0<br>Média3:0 | 0 | |
| **Scène 5**<br>Média1:2<br>Média2:2<br>Média3:2 | Scène 6<br>Média1:1<br>Média2:1<br>Média3:1 | Scène 1<br>Média1:0<br>Média2:0<br>Média3:0 | Scène 4<br>Média1:0<br>Média2:0<br>Média3:0 | | 6 | 9x30 |
| | Scène 7<br>Média1:1<br>Média2:1<br>Média3:1 | | | | | |
| **Scène 6**<br>Média1:2<br>Média2:2<br>Média3:2 | Scène 5<br>Média1:1<br>Média2:1<br>Média3:1 | Scène 1<br>Média1:0<br>Média2:0<br>Média3:0 | Scène 3<br>Média1:0<br>Média2:0<br>Média3:0 | | 0 | |

TABLEAU 28   (suite)

| Scènes niveau 0 | Niveau 1 | Niveau 2 | Niveau 3 | Niveau 4 | Nombre de modules à acquérir | Total mémoire nécessaire |
|---|---|---|---|---|---|---|
| | Scène 7 Média1:1 Média2:1 Média3:1 | | Scène 2 Média1:0 Média2:0 Média3:0 Scène 4 Média1:0 Média2:0 Média3:0 | | | |
| **Scène 7** Média1:2 Média2:2 Média3:2 | Scène 1 Média1:1 Média2:1 Média3:1 | Scène 3 Média1:0 Média2:0 Média3:0 | Scène 5 Média1:0 Média2:0 Média3:0 | | | |
| | | Scène 2 Média1:0 Média2:0 Média3:0 | | | | |
| | | Scène 4 Média1:0 Média2:0 Média3:0 | | | | |

## Revendications

1. Système de développement d'applications interactives distribuées sur un canal de transmission numérique, ces applications interactives installées en un point du réseau de transmission numérique consistant en une succession de scènes thématiques incorporant au moins des images en mode point, des images vidéo, des séquences sonores et des informations sous forme de fichier texte représentés au niveau d'au moins un moniteur d'affichage, le caractère interactif de ces applications étant produit par l'intermédiaire d'une fonctionnalisation spécifique de l'interface de commande d'un module de commande du moniteur d'affichage muni d'un système d'exploitation, l'ensemble moniteur d'affichage, module de commande et système d'exploitation constituant une plate-forme d'exécution, ce système comportant au moins un éditeur électronique permettant la simulation, d'une part, de l'écran d'affichage dudit moniteur d'affichage, et, d'autre part, de l'interface de commande dudit module de commande associé à ce moniteur d'affichage, et des moyens générateurs d'objets virtuels, spécifiques à l'application considérée, chaque objet virtuel constitué par des composants choisis parmi au moins des images en mode point, des images vidéo, des séquences sonores et des informations sous forme de fichiers textes étant susceptible d'être édité, affiché et représenté par ledit éditeur électronique pour former au moins une scène constitutive de ladite application, **caractérisé en ce qu'**il comporte en outre :

   - des moyens de commande de mise en corrélation d'une pluralité de couples événement/action, un événement étant défini comme la rupture d'un équilibre d'état dudit système d'exploitation et une action étant définie comme une initialisation respectivement une modification d'au moins un des paramètres d'affichage et de représentation d'une ou plusieurs scènes constitutives de ladite application ;
   - des moyens de mémorisation de l'ensemble des couples événement/action, mis en corrélation et constituant ladite application interactive.

**2.** Système selon la revendication 1, **caractérisé en ce que** lesdits moyens de commande de mise en corrélation d'une pluralité de couples événement/action, comportent des moyens générateurs d'une série d'instructions présentant une structure de contrôle de type liste de requêtes pour *"EVENEMENT" IF* condition sur toute variable booléenne $B_i \in [B_0, B_1, ..., B_j, B_N]$ ensemble de variables booléennes vraie *THEN "ACTION"* où *"EVENEMENT"* désigne une variable représentative d'un événement et *"ACTION"* désigne une variable représentative d'une action conditionnée à l'ensemble des variables booléennes, ladite variable *"EVENEMENT"* vraie constituant pour chaque couple événement/action une rupture d'équilibre d'état dudit système d'exploitation et ladite action constituant une initialisation ou une modification d'au moins un des paramètres d'affichage et de représentation d'une ou plusieurs scènes constitutives de ladite application.

**3.** Système selon la revendication 2, **caractérisé en ce que** l'ensemble des couples événement/action est organisé selon une suite de lignes de macro-instructions comprenant chacune un champ de position d'exécution, un champ événement, un champ action, un champ liste de conditions et un champ variable booléenne d'arrêt.

**4.** Système selon l'une des revendications 1 à 3, **caractérisé en ce que** ledit moniteur d'affichage, ledit module de commande et ledit système d'exploitation étant ceux d'un récepteur de télévision, ledit éditeur électronique permet la simulation de l'écran d'affichage de ce récepteur de télévision et de l'interface de commande d'un module de télécommande universel associé à ce récepteur de télévision, à une touche spécifique dudit module de télécommande universel simulé étant associé un événement, provoquant la rupture d'équilibre d'état dudit système d'exploitation.

**5.** Système selon l'une des revendications 1 à 3, **caractérisé en ce que** ledit moniteur d'affichage, ledit module de commande et ledit système d'exploitation étant ceux d'une station de travail ou d'un micro-ordinateur, ledit éditeur électronique permet la simulation de l'écran d'affichage de ce micro-ordinateur et de l'interface de commande d'un appareil périphérique d'entrée de ce micro-ordinateur, tel que le clavier, à une touche spécifique dudit appareil périphérique d'entrée étant associé un événement provoquant la rupture d'équilibre d'état dudit système d'exploitation.

**6.** Système selon l'une des revendications 1 à 5, **caractérisé en ce que** l'ensemble des couples événement/action est mis en corrélation selon une mise en correspondance bi-univoque logique entre événement et action, selon une application interactive native, indépendamment du format d'accès imposé par le système ou plate-forme d'accès à l'application interactive considérée.

**7.** Système selon l'une des revendications 1 à 6, **caractérisé en ce que** ledit éditeur électronique, lesdits moyens générateurs d'objets virtuels spécifiques à l'application et lesdits moyens de commande de mise en corrélation d'une pluralité de couples événement/action comprennent un module logiciel pilote permettant, d'une part, à partir d'une fenêtre d'affichage d'une représentation dudit module de commande et d'appareils périphériques, de recevoir une variable *"EVENEMENT"* correspondante, et, d'autre part, à partir d'une fenêtre d'affichage de scènes constitutives de ladite application, de provoquer soit l'initialisation, soit la modification de ce celles-ci.

**8.** Système selon la revendication 7, **caractérisé en ce que** celui-ci comporte en outre un outil de création de macro-instructions, ledit outil comportant au moins une page écran de mise en corrélation de couples événement/action comprenant au moins une fenêtre d'affichage d'un ensemble d'événements, une fenêtre d'affichage d'une action déclenchée associée à l'un des événements de cet ensemble d'événements et au moins une fenêtre de paramétrage de l'action déclenchée, des moyens de pointage et de sélection, ladite mise en corrélation de couples événement/action étant effectuée par sélection d'un événement parmi l'ensemble d'événements et de l'action par l'intermédiaire du moyen de pointage.

**9.** Système selon la revendication 7 ou 8, **caractérisé en ce qu'**il comporte en outre un outil de création d'objets virtuels, ledit outil de création d'objets virtuels comportant au moins une page écran de création d'objets comprenant au moins une fenêtre d'affichage d'une liste d'objets accessibles, cette liste d'objets étant affichée selon un champ de niveau et un champ de désignation d'objet, une fenêtre de choix de mode d'affichage/représentation de cet objet, un champ de type d'objet permettant de discriminer la nature de cet objet, un champ relatif à un ensemble de paramètres fonctions du média d'affichage/représentation de cet objet.

**10.** Système selon l'une des revendications 7 à 9, **caractérisé en ce qu'**il comporte en outre un outil d'édition des médias, ledit outil d'édition des médias comportant au moins une fenêtre page écran "Média" comprenant au moins une fenêtre d'affichage d'une liste des plates-formes d'exécution, une fenêtre d'affichage d'une liste de médias spécifiques susceptibles d'intervenir dans la composition d'une scène, chaque média étant défini par un nom et un attribut, l'attribut alloué à un média donné permettant de discriminer le caractère interne ou externe du média vis-à-vis de l'application considérée.

11. Système selon l'une des revendications 7 à 10, **caractérisé en ce qu'**il comporte en outre un outil d'édition de phrases sous forme de fichier texte, chaque phrase comportant un numéro d'identification permettant d'affecter cette phrase soit au niveau de l'application, soit au niveau d'une ou plusieurs scènes constitutives de cette application.

12. Système selon l'une des revendications 7 à 11, **caractérisé en ce qu'**il comporte en outre un outil de création de scène comportant au moins une fenêtre d'affichage d'une liste de scènes types repérées par une désignation spécifique, une fenêtre de définition de paramètres de la scène choisie, paramètres tels que numéro d'identification de scène, palette de couleurs, choix du fond à l'initialisation de la scène, position de départ du curseur, et une fenêtre de choix d'options, ledit outil permettant de créer une nouvelle scène, de dupliquer ou de supprimer une scène existante.

13. Système selon l'une des revendications 7 à 12, **caractérisé en ce qu'**il comporte en outre un outil de définition d'options dans une scène, ledit outil de définition d'options permettant à partir d'une liste d'options définie pour la scène considérée,

-   d'attribuer une option déterminée parmi ladite liste d'options, chaque option correspondant à un attribut d'affichage d'un objet virtuel ; et
-   de naviguer et choisir une option auxiliaire autour de l'option attribuée à partir d'un ensemble de boutons de commande du module de commande associé au moniteur d'affichage.

14. Système selon l'une des revendications 7 à 13, **caractérisé en ce qu'**il comporte en outre un outil d'édition des attributs d'une application déterminée, lesdits attributs comportant au moins un champ commentaires descriptifs d'application, un champ auteur de l'application, un champ de nom de l'application, un champ de numéro de version de l'application, un champ de palette de couleurs de l'application.

15. Système selon l'une des revendications 7 à 14, **caractérisé en ce que**, pour chaque plate-forme d'exécution d'application, celui-ci comporte un ensemble de tables de données communes au couple plate-forme d'exécution/ application, ledit ensemble de données communes comportant au moins :

-   une table des données d'application relatives à ladite plate-forme ;
-   une table des données caractéristiques de chaque plate-forme;
-   une table des événements relatifs à ladite plate-forme ;
-   une table des actions d'application relatives à ladite plate-forme ;
-   une table des fontes disponibles pour ladite plate-forme.

16. Système selon la revendication 15, **caractérisé en ce que** ladite table des données d'application relatives à ladite plate-forme est définie pour l'application considérée par l'intermédiaire d'un fichier texte.

17. Système selon l'une des revendications 1 à 16, **caractérisé en ce que** chaque application est définie par un ensemble de listes comportant au moins une liste des attributs d'application, une liste des objets virtuels communs, une liste des couples événement/action, une liste des fontes, une liste des médias, une liste des variables, une liste des phrases, une liste des palettes de couleurs, une liste des couleurs et une liste des scènes.

18. Système selon la revendication 15, **caractérisé en ce que** chaque élément de la liste des scènes, relatif à une scène considérée, constitutive de cette application, comporte au moins une liste d'attributs de scène, une liste des objets virtuels constitutifs de la scène, une liste d'options, une liste des phrases de la scène.

19. Système selon l'une des revendications 1 à 6, **caractérisé en ce que** l'ensemble des structures de données et de macro-instructions constituant une application interactive native, celui-ci comporte en outre un module de traduction de ladite application interactive native en une application interactive dédiée à un terminal d'accès de type déterminé.

20. Système selon l'une des revendications 1 à 19, **caractérisé en ce que**, dans le but de développer des applications interactives à diffusion cyclique accessibles sur un canal TV à partir d'un terminal d'accès muni d'un décodeur TV, ledit système comporte au moins :

- un moyen gestionnaire d'une pluralité de scènes successives constitutives de cette application selon un niveau de profondeur de chaque scène vis-à-vis de la scène courante, ledit module gestionnaire permettant d'analyser et de discriminer sur un nombre déterminé de scènes successives voisines de la scène courante les objets virtuels communs et les médias communs associés à ces objets de ces scènes successives des objets virtuels distincts et des médias distincts associés à ces objets de ces scènes successives ;
- des moyens d'actualisation desdits objets virtuels et médias communs et des objets virtuels et médias distincts pour au moins une scène successive constitutive de cette pluralité de scènes successives par rapport à la scène courante, ce qui permet d'optimiser le volume de données de réactualisation et le temps d'acquisition de ces données d'actualisation en fonction de la taille mémoire allouée à chaque type de média et du nombre de niveaux de profondeur d'analyse de chaque scène successive.

**Claims**

1. A system for developing interactive applications distributed on a digital transmission channel, these interactive applications installed at a point of the digital transmission network consisting of a succession of thematic scenes incorporating at least images in point mode, video images, sound sequences and information in text file form represented at the level of at least one display monitor, the interactive nature of these applications being produced by way of a specific functionalization of the control interface for a control module of the display monitor furnished with an operating system, the assembly consisting of the display monitor, control module and operating system constituting an execution platform, this system comprising at least one electronic editor allowing the simulation, on the one hand, of the display screen of said display monitor, and, on the other hand, of the control interface for said control module associated with this display monitor, and means generating virtual objects, specific to the application considered, each virtual object consisting of components chosen from among at least images in point mode, video images, sound sequences and information in the form of text files being capable of being edited, displayed and represented by said electronic editor so as to form at least one constituent scene of said application, **characterized in that** it furthermore comprises:

   - control means for correlating a plurality of event/action pairs, an event being defined as the breakage of state equilibrium of said operating system and an action being defined as an initialization respectively a modification of at least one of the display and representation parameters for one or more constituent scenes of said application;
   - means for storing the set of event/action pairs, correlated and constituting said interactive application.

2. The system as claimed in claim 1, **characterized in that** said control means for correlating a plurality of event/ action pairs comprise means generating a series of instructions exhibiting a checking structure of list of requests type for *"EVENT"* IF condition on any Boolean variable $B_i \in [B_0, B_1, ..., B_j, B_N]$ set of Boolean variables true *THEN "ACTION"* or *"EVENT"* designates a variable representative of an event and *"ACTION"* designates a variable representative of an action conditioned on the set of Boolean variables, said variable *"EVENT"* true constituting for each event/action pair a breakage of state equilibrium of said operating system and said action constituting an initialization or a modification of at least one of the display and representation parameters for one or more constituent scenes of said application.

3. The system as claimed in claim 2, **characterized in that** the set of event/action pairs is organized according to a suite of lines of macro-instructions each comprising an execution position field, an event field, an action field, a list of conditions field and a Boolean halt variable field.

4. The system as claimed in one of claims 1 to 3, **characterized in that** said display monitor, said control module and said operating system being those of a television receiver, said electronic editor allows the simulation of the display screen of this television receiver and of the control interface for a universal remote control module associated with this television receiver, with a specific key of said simulated universal remote control module there being associated an event, causing the breakage of state equilibrium of said operating system.

5. The system as claimed in one of claims 1 to 3, **characterized in that** said display monitor, said control monitor and said operating system being those of a workstation or of a microcomputer, said electronic editor allows the simulation of the display screen of this microcomputer and of the control interface for a peripheral input apparatus of this microcomputer, such as the keyboard, with a specific key of said peripheral input apparatus there being associated an event causing the breakage of state equilibrium of said operating system.

**6.** The system as claimed in one of claims 1 to 5, **characterized in that** the set of event/action pairs is correlated according to a logic one-to-one mapping between event and action, according to a native interactive application, independently of the access format imposed by the system or platform for access to the interactive application considered.

**7.** The system as claimed in one of claims 1 to 6, **characterized in that** said electronic editor, said means generating virtual objects specific to the application and said control means for correlating a plurality of event/action pairs comprise a driver software module making it possible, on the one hand, on the basis of a window for displaying a representation of said control module and of peripheral apparatuses, to receive a corresponding variable *"EVENT"* and, on the other hand, on the basis of a window for displaying constituent scenes of said application, to cause either their initialization or their modification.

**8.** The system as claimed in claim 7, **characterized in that** it furthermore comprises a tool for creating macroinstructions, said tool comprising at least one screen page for correlating event/action pairs comprising at least one display window for a set of events, a display window for a triggered action associated with one of the events of this set of events and at least one parameterization window for the action triggered, means of pointing and of selection, said correlating of event/action pairs being performed by selection of one event from among the set of events and of the action by way of the pointing means.

**9.** The system as claimed in claim 7 or 8, **characterized in that** it furthermore comprises a tool for creating virtual objects, said tool for creating virtual objects comprising at least one screen page for creating objects comprising at least one window for displaying a list of accessible objects, this list of objects being displayed according to a level field and an object designation field, a window for choosing mode of display/representation of this object, a field of object type making it possible to discriminate the nature of this object, a field relating to a set of parameters dependent on the medium of display/representation of this object.

**10.** The system as claimed in one of claims 7 to 9, **characterized in that** it furthermore comprises a tool for editing the media, said tool for editing the media comprising at least one "Media" screen page window comprising at least one window for displaying a list of execution platforms, a window for displaying a list of specific media capable of intervening in the composition of a scene, each medium being defined by a name and an attribute, the attribute allocated to a given medium making it possible to discriminate the internal or external nature of the medium with regard to the application considered.

**11.** The system as claimed in one of claims 7 to 10, **characterized in that** it furthermore comprises a tool for editing phrases in the form of text file, each phrase comprising an identification number making it possible to assign this phrase either at the application level, or at the level of one or more constituent scenes of this application.

**12.** The system as claimed in one of claims 7 to 11, **characterized in that** it furthermore comprises a scene creation tool comprising at least one window for displaying a list of standard scenes tagged by a specific designation, a window for defining parameters of the chosen scene, parameters such as scene identification number, color palette, choice of background on initialization of the scene, starting position of the cursor, and a window for choosing options, said tool making it possible to create a new scene, to duplicate or to delete an existing scene.

**13.** The system as claimed in one of claims 7 to 12, **characterized in that** it furthermore comprises a tool for defining options in a scene, said tool for defining options making it possible on the basis of a defined list of options for the scene considered

- to allot an option determined from among said list of options, each option corresponding to a display attribute of a virtual object; and
- to navigate and choose an auxiliary option around the option allotted on the basis of a set of control buttons of the control module associated with the display monitor.

**14.** The system as claimed in one of claims 7 to 13, **characterized in that** it furthermore comprises a tool for editing the attributes of a determined application, said attributes comprising at least one application descriptive comments field, an application author field, an application name field, an application version number field, an application color palette field.

15. The system as claimed in one of claims 7 to 14, **characterized in that**, for each application execution platform, it comprises a set of data tables common to the execution platform/application pair, said set of common data comprising at least:

- a table of application data relating to said platform;
- a table of characteristic data for each platform;
- a table of events relating to said platform;
- a table of application actions relating to said platform;
- a table of fonts available for said platform.

16. The system as claimed in claim 15, **characterized in that** said table of application data relating to said platform is defined for the application considered by way of a text file.

17. The system as claimed in one of claims 1 to 16, **characterized in that** each application is defined by a set of lists comprising at least one list of application attributes, a list of common virtual objects, a list of event/action pairs, a list of fonts, a list of media, a list of variables, a list of phrases, a list of color palettes, a list of colors and a list of scenes.

18. The system as claimed in claim 15, **characterized in that** each element of the list of scenes, which element relates to a scene considered, a constituent of this application, comprises at least one list of scene attributes, a list of constituent virtual objects of the scene, a list of options, a list of phrases of the scene.

19. The system as claimed in one of claims 1 to 6, **characterized in that** the set of data structures and macroinstructions constituting a native interactive application, it furthermore comprises a module for translating said native interactive application into an interactive application dedicated to a determined-type access terminal.

20. The system as claimed in one of claims 1 to 19, **characterized in that**, with the aim of developing cyclically broadcast interactive applications accessible on a TV channel from an access terminal furnished with a TV decoder, said system comprises at least:

- a manager means for managing a plurality of successive constituent scenes of this application according to a level of depth of each scene with regard to the current scene, said manager module making it possible to analyze and to discriminate over a determined number of successive scenes neighboring the current scene the common virtual objects and the common media associated with these objects of these successive scenes from the distinct virtual objects and distinct media associated with these objects of these successive scenes;
- means of updating said virtual objects and common media and virtual objects and distinct media for at least one successive constituent scene of this plurality of successive scenes with respect to the current scene, thereby making it possible to optimize the volume of reupdating data and the acquisition time for these updating data as a function of the memory size allocated to each type of medium and of the number of levels of depth of analysis of each successive scene.

**Patentansprüche**

1. System zur Entwicklung interaktiver Anwendungen, die auf einem digitalen Übertragungskanal übertragen werden, wobei diese interaktiven Anwendungen, die an einem Punkt des digitalen Übertragungsnetzes installiert sind, aus einer Folge thematischer Szenen bestehen, die mindestens Standbilder, bewegte Bilder, Tonsequenzen und Informationen in Form von Textdateien umfassen, die auf der Ebene mindestens eines Monitors dargestellt werden, wobei der interaktive Charakter dieser Anwendungen durch eine spezifische Funktionalisierung der Steuerungsschnittstelle eines Steuerungsmoduls des Monitors erzeugt wird, das mit einem Betriebssystem ausgestattet ist, wobei die Einheit aus Monitor, Steuerungsmodul und Betriebssystem eine Ausführungsplattform bilden, wobei dieses System mindestens einen elektronischen Editor umfasst, der die Simulation einerseits des Bildschirms des Monitors und andererseits der Steuerungsschnittstelle des zu diesem Monitor gehörenden Steuerungsmoduls erlaubt, und Mittel zur Erzeugung virtueller Objekte, die für die betrachtete Anwendung spezifisch sind, wobei jedes virtuelle Objekt aus Komponenten besteht, die mindestens aus den Standbildern, bewegten Bildern, Tonsequenzen und Informationen in Form von Textdateien ausgewählt wurden, die geeignet sind, editiert, angezeigt und von dem elektronischen Editor dargestellt zu werden, um mindestens eine Szene zu bilden, die Bestandteil der genannten Anwendung ist, **dadurch gekennzeichnet, dass** es ferner umfasst:

- Steuerungsvorrichtungen, um eine Mehrzahl von Ereignis-Aktions-Paaren in Korrelation miteinander zu setzen, wobei ein Ereignis als Unterbrechung eines Zustandsgleichgewichts des Betriebssystems und eine Aktion als eine Initialisierung beziehungsweise Änderung mindestens eines der Anzeige- und Darstellungsparameter einer oder mehrerer Szenen, die Bestandteil der besagten Anwendung sind, definiert ist;
- Vorrichtungen zum Speichern der Gesamtheit der Ereignis-Aktions-Paare, die miteinander in Korrelation gesetzt wurden und die interaktive Anwendung bilden.

2. System nach Anspruch 1, **dadurch gekennzeichnet, dass** die Steuerungsmittel, mit denen eine Mehrzahl von Ereignis-Aktions-Paaren in Korrelation miteinander gesetzt wird, Vorrichtungen zum Erzeugen einer Befehlsfolge umfassen, die eine Kontrollstruktur nach Art einer Frageliste für ein *"EREIGNIS" WENN* Bedingung für jede Aussagenvariable $B_i$ $[B_0,B_1,...,B_j,B_N]$ der Einheit der Aussagenvariablen wahr, *DANN "AKTION"*, wobei *"EREIGNIS"* eine Variable bezeichnet, die für ein "Ereignis" steht und *"AKTION"* eine Variable bezeichnet, die für eine Aktion steht, die auf alle Aussagenvariablen konditioniert ist, welche wahre Variable *"EREIGNIS"* für jedes Ereignis-Aktions-Paar eine Unterbrechung des Zustandsgleichgewichts des Betriebssystems und welche Aktion eine Initialisierung oder Änderung mindestens eines der Anzeige- und Darstellungsparameter einer oder mehrerer Szenen darstellt, die Bestandteil der besagten Anwendung sind.

3. System nach Anspruch 2, **dadurch gekennzeichnet, dass** alle Ereignis-Aktions-Paare entsprechend einer Folge von Linien von Makrobefehlen organisiert sind, die jeweils ein Ausführungspositionsfeld, ein Ereignisfeld, ein Aktionsfeld, ein Bedingungslistenfeld und ein Abbruchaussagenvariablenfeld umfassen.

4. System nach einem der Ansprüche 1 bis 3, **dadurch gekennzeichnet, dass** der elektronische Editor, wenn der Monitor, das Steuerungsmodul und das Betriebssystem diejenigen eines Fernsehempfängers sind, die Simulation des Bildschirms dieses Empfängers und der Steuerungsschnittstelle eines mit diesem Fernsehempfänger verbundenen allgemein verwendbaren Fernbedienungsmoduls erlaubt, wobei einer besonderen Taste des simulierten allgemein verwendbaren Fernbedienungsmoduls ein Ereignis zugeordnet wird, das die Unterbrechung des Zustandsgleichgewichts des Betriebssystems bewirkt.

5. System nach einem der Ansprüche 1 bis 3, **dadurch gekennzeichnet, dass** der elektronische Editor, wenn der Monitor, das Steuerungsmodul und das Betriebssystem diejenigen einer Workstation oder eines PCs sind, die Simulation des Bildschirms dieses PCs und der Steuerungsschnittstelle eines peripheren Eingabegeräts dieses PCs wie der Tastatur erlaubt, wobei einer besonderen Taste dieses peripheren Geräts ein Ereignis zugeordnet wird, das die Unterbrechung des Zustandsgleichgewichts des Betriebssystems bewirkt.

6. System nach einem der Ansprüche 1 bis 5, **dadurch gekennzeichnet, dass** sämtliche Ereignis-Aktions-Paare miteinander in Korrelation gesetzt werden, und zwar entsprechend einer doppelten logischen Zuordnung zwischen Ereignis und Aktion, entsprechend einer nativen interaktiven Anwendung und unabhängig von dem vom System vorgegebenen Zugriffsformat oder der zur entsprechenden interaktiven Anwendung führenden Zugriffsplattform.

7. System nach einem der Ansprüche 1 bis 6, **dadurch gekennzeichnet, dass** der elektronische Editor, die Mittel zur Erzeugung anwendungsspezifischer virtueller Objekte und die Steuerungsmittel, mit denen eine Mehrzahl von Ereignis-Aktions-Paaren in Korrelation miteinander gesetzt wird, ein Hauptsoftwaremodul umfassen, das einerseits von einem Anzeigefenster einer Darstellung dieses Steuerungsmoduls und peripheren Geräten aus den Empfang einer entsprechenden Variablen *"EREIGNIS"* und andererseits von einem Anzeigefenster von Szenen, die Bestandteil der Anwendung sind, aus entweder ein Auslösen der Initialisierung oder der Änderung derselben erlaubt.

8. System nach Anspruch 7, **dadurch gekennzeichnet, dass** dieses ferner ein Werkzeug zur Erzeugung von Makrobefehlen umfasst, welches Werkzeug mindestens eine Bildschirmseite umfasst, mit der Ereignis-Aktions-Paare in Korrelation gesetzt werden und die mindestens ein Anzeigefenster für eine Gruppe von Ereignissen, ein Anzeigefenster für eine im Zusammenhang mit einem der Ereignisse dieser Gruppe von Ereignissen ausgelösten Aktion und mindestens ein Fenster zur Parametrisierung der ausgelösten Aktion und Mittel zum Zeigen und Auswählen umfasst, wobei das In-Korrelation-Setzen von Ereignis-Aktions-Paaren durch Auswahl eines Ereignisses aus der Gruppe von Ereignissen und der Aktion mittels der Zeigevorrichtung erfolgt.

9. System nach Anspruch 7 oder 8, **dadurch gekennzeichnet, dass** es ferner ein Werkzeug zur Erzeugung virtueller Objekte umfasst, welches Werkzeug zur Erzeugung virtueller Objekte mindestens eine Bildschirmseite für die Erzeugung von Objekten umfasst, die mindestens ein Anzeigefenster für eine Liste zugänglicher Objekte umfasst, welche Objektliste entsprechend einem Ebenenfeld und einem Objektbezeichnungsfeld angezeigt wird, ferner ein Fenster zum Auswählen der Anzeige-/Darstellungsart dieses Objekts, ein Feld für die Art des Objekts, das die Unterscheidung der Art dieses Objekts ermöglicht, sowie ein Feld für eine Gruppe von Parametern, die abhängig sind vom Anzeige-/Darstellungsmedium für dieses Objekt.

10. System nach einem der Ansprüche 7 bis 9, **dadurch gekennzeichnet, dass** es ferner ein Werkzeug zum Editieren der Medien umfasst, welches Werkzeug zum Editieren der Medien mindestens ein Bildschirmseitenfenster "Medien" umfasst, das mindestens ein Anzeigefenster für eine Liste der Ausführungsplattformen; und ein Fenster für das Anzeigen einer Liste spezifischer Medien umfasst, die geeignet sind, bei der Zusammenstellung einer Szene mitzuwirken, wobei jedes Medium durch einen Namen und ein Attribut definiert ist und wobei das einem gegebenen Medium zugeordnete Attribut eine Unterscheidung der inneren oder äußeren Art des Mediums gegenüber der betrachteten Anwendung ermöglicht.

11. System nach einem der Ansprüche 7 bis 10, **dadurch gekennzeichnet**, es ferner ein Werkzeug zur Editierung von Sätzen in Form von Textdateien umfasst, wobei jeder Satz eine Identifikationsnummer aufweist, die eine Zuordnung dieses Satzes entweder auf Anwendungsebene oder auf der Ebene einer oder mehrerer Szenen ermöglicht, die Bestandteil dieser Anwendung sind.

12. System nach einem der Ansprüche 7 bis 11, **dadurch gekennzeichnet, dass** es ferner ein Werkzeug zur Erstellung einer Szene umfasst, das mindestens ein Anzeigefenster für eine Liste von Musterszenen aufweist, die durch eine besondere Bezeichnung gekennzeichnet sind, ein Fenster zur Festlegung von Parametern für die ausgewählte Szene, und zwar Parametern wie Identifikationsnummer der Szene, Farbenpalette, Wahl des Hintergrunds bei Initialisierung der Szene, Ausgangsposition des Cursors, und ein Fenster zur Wahl von Optionen, welches Werkzeug die Erstellung einer neuen Szene, die Duplizierung oder das Entfernen einer vorhandenen Szene ermöglicht.

13. System nach einem der Ansprüche 7 bis 12, **dadurch gekennzeichnet, dass** es ferner ein Werkzeug zur Festlegung von Optionen in einer Szene umfasst, welches Werkzeug zur Festlegung von Optionen es ermöglicht, ausgehend von einer für die entsprechende Szene erstellten Optionsliste

   - aus der Optionsliste eine bestimmte Option zuzuweisen, wobei jede Option einem Anzeigeattribut eines virtuellen Objekts entspricht; und
   - den Cursor zu bewegen und eine Hilfsoption um die zugewiesene Option herum von einer Gruppe von Steuerschaltern des zum Monitor gehörenden Steuerungsmoduls aus auszuwählen.

14. System nach einem der Ansprüche 7 bis 13, **dadurch gekennzeichnet, dass** es ferner ein Werkzeug zum Editieren der Attribute einer bestimmten Anwendung umfasst, wobei die Attribute mindestens ein Feld für die Anwendung beschreibende Kommentare, ein Feld für den Urheber der Anwendung, ein Feld für den Namen der Anwendung, ein Feld für die Versionsnummer der Anwendung und ein Feld für die Farbenpalette der Anwendung umfassen.

15. System nach einem der Ansprüche 7 bis 14, **dadurch gekennzeichnet, dass** es für jede Anwendungs-/Ausführungsplattform eine Gruppe von Datentabellen umfasst, die dem Paar aus Ausführungs-/Anwendungsplattform gemein sind, welche Gruppe gemeinsamer Datentabellen mindestens umfasst:

   - eine Tabelle der Anwendungsdaten, die sich auf die genannte Plattform beziehen;
   - eine Tabelle der für jede Plattform charakteristischen Daten;
   - eine Tabelle der Ereignisse, die sich auf diese Plattform beziehen;
   - eine Tabelle der Anwendungsaktionen, die sich auf die Plattform beziehen;
   - eine Tabelle der Schriftarten, die für diese Plattform zur Verfügung stehen.

16. System nach Anspruch 15, **dadurch gekennzeichnet, dass** die Tabelle mit den Anwendungsdaten, die sich auf die Plattform beziehen, für die betrachtete Anwendung mittels einer Textdatei definiert ist.

17. System nach einem der Ansprüche 1 bis 16, **dadurch gekennzeichnet, dass** jede Anwendung über eine Gruppe von Listen definiert ist, die mindestens eine Liste der Anwendungsattribute, eine Liste der gemeinsamen virtuellen Objekte, eine Liste der Ereignis-Aktions-Paare, eine Liste der Schriftarten, eine Liste der Medien, eine Variablenliste, eine Satzliste, eine Liste der Farbenpaletten, eine Farbenliste und eine Szenenliste umfasst.

18. System nach Anspruch 15, **dadurch gekennzeichnet, dass** jedes Element der Szenenliste, das sich auf eine betrachtete Szene bezieht, die Bestandteil dieser Anwendung ist, mindestens eine Liste mit Szenenattributen, eine Liste der virtuellen Objekte, die die Szene bilden, eine Optionsliste und eine Liste der Sätze der Szene umfasst.

19. System nach einem der Ansprüche 1 bis 6, **dadurch gekennzeichnet, dass**, wenn die gesamten Datenstrukturen und Makrobefehle eine native interaktive Anwendung bilden, dieses ferner ein Modul zum Umsetzen dieser nativen interaktiven Anwendung in eine interaktive Anwendung umfasst, die ausschließlich einem Zugriffsterminal eines bestimmten Typs zugeordnet ist.

20. System nach einem der Ansprüche 1 bis 19, **dadurch gekennzeichnet, dass** das System mit dem Ziel, interaktive Anwendungen mit zyklischer Ausstrahlung zu entwickeln, die von einem mit einem TV-Dekodierer ausgestatteten Zugriffsterminal auf einem Fernsehkanal zugänglich sind, mindestens umfasst:

- eine Vorrichtung zur Bearbeitung mehrerer aufeinanderfolgender Szenen, die Bestandteil dieser Anwendung sind, entsprechend einem Tiefenniveau jeder Szene gegenüber der laufenden Szene, welches Bearbeitungsmodul ermöglicht, aus einer bestimmten Anzahl aufeinanderfolgender Szenen, die sich nahe der laufenden Szene befinden, gemeinsame virtuelle Objekte und gemeinsame Medien zu analysieren und zu unterscheiden, die diesen Objekten dieser aufeinanderfolgenden Szenen der unterschiedlichen virtuellen Objekte und der unterschiedlichen Medien zugeordnet sind, die diesen Objekten dieser aufeinanderfolgenden Szenen zugeordnet sind;
- Vorrichtungen zur Aktualisierung der gemeinsamen virtuellen Objekte und Medien und der unterschiedlichen virtuellen Objekte und Medien für mindestens eine aufeinanderfolgende Szene, die Teil dieser Mehrzahl aufeinanderfolgender Szenen bezogen auf die laufende Szene ist, wodurch das Reaktualisierungs-Datenvolumen und die Erfassungszeit dieser Aktualisierungsdaten in Abhängigkeit von der Speichergröße, die jeder Art Medium zugewiesen ist, und von der Anzahl der Analyse-Tiefenebenen jeder aufeinanderfolgenden Szene optimiert werden können.

1.) OPentv

| Application Document ADROpentv | Pilote ADR (en opentv) |
| --- | --- |

| OS Opentv |
| --- |

2.) Mheg

| Application Document ADR Mheg |
| --- |

| Interpréteur MHEG |
| --- |

3.) Java Tv

| Application Document ADR Java Tv |
| --- |

| Machine virtuelle Java Tv |
| --- |

4.) Application HTML

| Application Document ADRHTML |
| --- |

| Interpréteur HTML |
| --- |

5.) Application Document pour logiciel spécifique pour WWW (exemple Roaster, Neuron) Plateforme internet

| Application Document ADRNeuron |
| --- |

| Player Neuron (Toolbook) |
| --- |
| r HTML |

| Netscape ou Internet Explorer |
| --- |

FIG.1a.

FIG.1b.

FIG.1d.

Structure d'une application

Application

Structures "communes"

Liste des données
Attributs "application" (AP)
Liste des objets (OC) communs
Liste des Events/actions (AA) "application"
Liste des backgrounds (BG)
Liste des media (ME)
Liste des variables (VA)
Liste des phrases (PH)
Liste des palettes (PA)
Liste des couleurs (CO)

plateformes cibles (PL)

Descr_Objets

Descr_Objets

Liste des scènes

├─── Table des actions (AC)

├─── Table des fontes (FO)

├─── Table des événements (EV)

└─── Table des données (DO)

Pour chaque scène XXX

Au moins un fond de référence
Attributs "scène" (SC)
Liste des objets (OS) de la scène
Liste des Events/actions (AS) "scènes"
Attributs du curseur (OP)
Liste des phrases (PS)

Descr_Objets

Descr_EvAction

Données internes AD RData
Données externes SI_DUB
Données externes (Module deb carte à puce)

FIG.1c.

# FIG.2 .
## MODULE COMMANDE T V
## SIMULÉ

FIG.3a1.

FIG.3a2.

FIG.3a3.

Définition de l'objet 1:

```
OC: AllData
1,1,<sta>,-1,<text>,q1,1301,213,147,300,2,2,1,1
2,2,<sta>,-1,<text>,titre,1302,110,187,250,2,3,1,
3,3,<opt>,-1,<pict>,curs1,7,57,239,30,30,1,1,false
4,4,<sta>,-1,<text>,opt1,1303,110,257,100,1,3,1,
5,5,<opt>,2,<pict>,curs2,7,57,319,30,30,1,1,false
6,6,<sta>,-1,<text>,opt2,1304,110,328,150,2,3,1,
7,7,<opt>,3,<pict>,curs3,8,57,389,36,30,1,1,false
8,8,<sta>,-1,<text>,opt3,1305,110,406,200,1,3,1,
9,9,<sta>,-1,<pict>,fhaut,13,315,305,30,30,1,false
10,10,<sta>,-1,<pict>,ok,10,309,394,30,1,false
```

**Liste des objets d'interface** Q1

Liste des objets:
1 q1
2 titre
3 curs1
4 opt1
5 curs2
6 opt2
7 curs3
8 opt3
9 fhaut
10 ok
11 fbas
12 loupe

Derrière

Niveau: ↓

Devant

Ajoute
Duplique
Supprime

Mode d'affichage: <sta>
Toujours visible
Type de l'objet: <text>
Phrase so q1
Helvetica 18

Pos X 213
Pos Y 147
Hauteur 2 Lignes
largeur 300

'Cliquer sur une scène dans la liste des scènes pour afficher ses objets

**FIG.3b1.**

---

Définition de l'objet 3

```
OC: All Data
1,1,<sta>,-1,<text>,q1,1301,213,147,300,2,2,1,1
2,2,<sta>,-1,<text>,titre,1302,110,187,250,2,3,1,1
3,3,<opt>,1,<pict>,curs1,7,57,239,30,30,1,1,false
```

**Liste des objets d'interface** Q1

Liste des objets:
1 q1
2 titre
3 curs1
4 opt1
5 curs2
6 opt2
7 curs3
8 opt3
9 fhaut
10 ok
11 fbas
12 loupe

Derrière

Niveau: 3

Devant

Ajoute
Duplique
Supprime

Mode d'affichage: <opt>
opt 1
Type de l'objet: <pict>
Media: curs1

Pos X 57
Pos Y 239
Hauteur
largeur

'Click to display the data of this object (and flash it on the TVset screen)

**FIG.3b2.**

FIG.3c.

BG_AllData

1,<video>,-1,1,Fond vidéo
2,<mpeg>,1,-1,fondacceuil
3,<mpeg>,2,-1,explic
4,<mpeg>,46,1,fondat
5,<mpeg>,3,1,fond1

TablesAppli

dh-hdr-h:QuizBA215 ... MainQUIZacc...98 ... Voir la grille

| Scènes | Couleurs | Variables | Media | Bkgnds | Palettes | Application |

Liste des bkgnds:

Fond vidéo
fondacceuil
explic
fondat
fond1
repet
rep1
zoomat
zoom1
resum
zoom2
fond2
rep2

Ajoute
Utilisé...

Bkgnd ID : 3
Type du background : <mpeg>
Paramètre (si besoin) : 2
Bkgnd d'attente (si <mpeg>) : -1

Media : explic
Aucun

FIG.3d.

FIG.3e.

PalPhrases

Liste des Phrases.                                    Q1

Liste des phrases:

PS q1
PS titre1
PS opt1
PS opt2
PS opt3

Ajoute

Phrase ID : 1301
Source : <pilote>
Type : <txt>
Valeur initiale : Question 1

Enregistre

Texte:

Question 1

VA_AllData

| |
| --- |
| 1,<appli>,<txt>,Texte de base,Variable |
| 2,<appli>,<num>,nbpoint,0 |
| 3,<appli>,<num>,init,0 |
| 4,<appli>,<num>,increment,1 |
| 5,<appli>,<num>,point,10 |

**Tables Appli**

| Scènes | Couleurs | Variables | Media | Bkgnds | Palettes | Application |

Liste des variables :
VA Texte de base
VA nbpoint
VA init
VA increment
VA point

Variable ID : 202
Source : <appli>
Type : <num>
Valeur initiale : 0

Ajoute

## FIG. 3f.

---

| 123 |
| --- |
| Q1 |
| 1 |
| 4 |
| 1 |
| false |

**Tables Appli**

| Scènes | Couleurs | Variables | Media | Bkgnds | Palettes | Application |

Liste des scènes :
home
explic
Q1
Q2
Q3
Q4
Q5
Q6
Q7
Q8
Q9
Q10
M1

Scène ID : 123
Palette de couleur : pal par defaut
Background à l'openScene : fondat
Position départ curseur : opt 1
Conserver la position option : false

Options du curseur :
opt 1
opt 2
opt 3

Ajoute
Utilisé

Action
touche OK : GoScene
Param 1 : M1
Param 2 :
Pass :

Ajoute
Utilisé...
Duplique

1
1 [ ] 1
2

## FIG. 3g.

OP_AllData
1,1,2,1,1,6,124,-1,false
2,1,3,2,6,125,-1,false
3,2,1,3,3,6,124,-1,false

Options du curseur :
opt 1
opt 2
opt 3

Ajoute
Utilisé...

Action
touche OK : GoScene
Param 1 : MI
Param 2 :
Pass :

1

1

1

3

# FIG. 3h1.

Options du curseur :
opt 1
opt 2
opt 3

Ajoute
Utilisé..

Action
touche OK : GoScene
Param 1 : B1
Param 2 :
Pass :

1

2

2

3

OP_AllData
1,1,2,1,1,6,124,-1,false
2,1,3,2,2,6,125,-1,false
3,2,1,3,3,6,124,-1,false

# FIG. 3h2.

FIG.3i.

FIG.3j1.

FIG.3j2.

FIG.4a.

FIG.5b

FIG.4b.

# FIG.5a.

Lc

Lc+1, . . . . . Lc+p

M1

L1c, L2c, . . . . ., Lpc

L1d, L2d, . . . . ., Lpd

M2

Lmi ⟶ (Lic , Lid )